# EUROPEAN PATENT APPLICATION

(11) **EP 4 815 601 A2**
(43) Date of publication of application: **30.09.2026**
(21) Application number: 26199297.8
(22) Date of filing: 10.01.2023
(51) Int. Cl.: H04W 72/40

(54) **METHOD AND DEVICE FOR RESOURCE ALLOCATION IN V2X SYSTEM**

(30) Priority: 10.01.2022 KR 20220003380; 11.02.2022 KR 20220018224
(62) Document number(s) of the earlier application(s) in accordance with Art. 76 EPC: 23737475.6 / 4 397 118
(71) Applicant: Samsung Electronics Co., Ltd., Suwon-si, Gyeonggi-do 16677 (KR)
(72) Inventor: Shin, Cheolkyu, 16677 Suwon-si (KR); Park, Sungjin, 16677 Suwon-si (KR); Yang, Hyewon, 16677 Suwon-si (KR)
(74) Representative: Nederlandsch Octrooibureau

(57) **Abstract**

The present disclosure relates to a communication method and system for converging a 5th-Generation (5G) communication system for supporting higher data rates beyond a 4th-Generation (4G) system with a technology for Internet of Things (IoT). The present disclosure may be applied to intelligent services based on the 5G communication technology and the IoT-related technology, such as smart home, smart building, smart city, smart car, connected car, health care, digital education, smart retail, security and safety services. Methods and apparatuses are provided in which a first user equipment (UE) transmits, to a second UE, first sidelink control information (SCI) requesting inter-UE coordination information. The first UE receives, from the second UE, second SCI providing the inter-UE coordination information. The first SCI includes a field indicating that the first SCI is used to request the inter-UE coordination information.

## Description

### [Technical Field]

The disclosure relates generally to a wireless mobile communication system and, more particularly, to a method and a device for resource allocation in a procedure in which a vehicle terminal supporting vehicle communication (vehicle-to-everything (V2X)) transmits information to or receives information from another vehicle terminal and a pedestrian portable terminal using a sidelink.

### [Background Art]

To meet the demand for wireless data traffic having increased since deployment of 4th generation (4G) communication systems, efforts have been made to develop an improved 5th generation (5G) or pre-5G communication system. Therefore, the 5G or pre-5G communication system is also referred to as a "beyond 4G network" communication system or a "post long term evolution (LTE)" system. The 5G communication system is considered to be implemented in ultrahigh frequency (mmWave) bands (e.g., 60GHz bands) so as to accomplish higher data rates. To decrease propagation loss of the radio waves and increase the transmission distance in the ultrahigh frequency bands, beamforming, massive multiple-input multiple-output (MIMO), full dimensional MIMO (FD-MIMO), array antenna, analog beam forming, large scale antenna techniques are discussed in 5G communication systems. In addition, in 5G communication systems, development for system network improvement is under way based on advanced small cells, cloud radio access networks (RANs), ultra-dense networks, device-to-device (D2D) communication, wireless backhaul, moving network, cooperative communication, coordinated multi-points (CoMP), reception-end interference cancellation, etc. In the 5G system, hybrid frequency shift keying (FSK) and quadrature amplitude modulation (QAM) (FQAM) and sliding window superposition coding (SWSC) as an advanced coding modulation (ACM), and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through connection with a cloud server, has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have been recently researched. Such an IoT environment may provide intelligent Internet technology services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology and various industrial applications.

In line with this, various attempts have been made to apply 5G communication systems (5th generation communication system or new radio (NR)) to IoT networks. For example, technologies such as a sensor network, MTC, and M2M communication may be implemented by beamforming, MIMO, and array antennas. Application of a cloud RAN as the above-described big data processing technology may also be considered an example of convergence of the 5G technology with the IoT technology.

With the advance of wireless communication systems as described above, various services can be provided, and accordingly there is a need for schemes to smoothly provide these services.

The above information is presented as background information only to assist with an understanding of the disclosure. No determination has been made, and no assertion is made, as to whether any of the above might be applicable as prior art with regard to the disclosure.

### [Disclosure of Invention]

### [Technical Problem]

The disclosure relates to a wireless mobile communication system and, more particularly, to a method and device for supporting multi-antenna transmission in a procedure in which a vehicle terminal supporting V2X exchanges information with another vehicle terminal and a pedestrian portable terminal using a sidelink. In particular, the disclosure relates to a resource selection method when discontinuous reception (DRX) is performed between terminals. In addition, the disclosure relates to a method for resource selection through inter-user equipment (UE) coordination.

### [Solution to Problem]

According to an aspect of the present disclosure, a method performed by a first UE in a communication system is provided. The first UE transmits, to a second UE, first sidelink control information (SCI) requesting inter-UE coordination information. The first UE receives, from the second UE, second SCI providing the inter-UE coordination information. The first SCI includes a field indicating that the first SCI is used to request the inter-UE coordination information.

According to another aspect of the present disclosure, a method performed by a second UE in a communication system is provided. The second UE receives, from a first UE, first SCI requesting inter-UE coordination information. The second UE transmits, to the first UE, second SCI providing the inter-UE coordination information. The first SCI includes a field indicating that the first SCI is used to request the inter-UE coordination information.

According to another aspect of the present disclosure, a first UE in a communication system is provided. The first UE includes a transceiver and a controller. The controller is configured to transmit, to a second UE, first SCI requesting inter-UE coordination information, and receive, from the second UE, second SCI providing the inter-UE coordination information. The first SCI includes a field indicating that the first SCI is used to request the inter-UE coordination information.

According to another aspect of the present disclosure, a second UE in a communication system is provided. The second UE includes a transceiver and a controller. The controller is configured to receive, from a first UE, first SCI requesting inter-UE coordination information, and transmit, to the first UE, second SCI providing the inter-UE coordination information. The first SCI includes a field indicating that the first SCI is used to request the inter-UE coordination information.

### [Advantageous Effects of Invention]

The disclosure provides a resource selection method when DRX is performed between terminals in sidelink communication. In addition, the disclosure provides a method for resource selection through inter-UE coordination. The method can be applied and effectively used to minimize power consumption of a terminal. Resource allocation may be improved through the proposed method.

### [Brief Description of Drawings]

The above and other aspects, features, and advantages of certain embodiments of the disclosure will be more apparent from the following description taken in conjunction with the accompanying drawings, in which:
FIG. 1 is a diagram illustrating an example of a communication system to which an embodiment of the disclosure may be applied;
FIG. 2 is a diagram illustrating a V2X communication method performed via a sidelink, according to an embodiment;
FIG. 3 is a diagram for illustrating a resource pool defined as a set of resources on time and frequency used for sidelink transmission and reception, according to an embodiment;
FIG. 4 is a sequence diagram illustrating a method of allocating a transmission resource in a sidelink by a base station, according to an embodiment;
FIG. 5 is a sequence diagram illustrating a method by which a terminal directly allocates a sidelink transmission resource via sensing in a sidelink, according to an embodiment;
FIG. 6 is a diagram illustrating a mapping structure of physical channels mapped to one slot in a sidelink, according to an embodiment;
FIG. 7 is a diagram for defining a sensing window and a resource selection window necessary for a terminal to perform resource (re)selection and re-evaluation for resource allocation in a sidelink in a case of full sensing operation, according to an embodiment;
FIG. 8 is a diagram illustrating a method of performing partial sensing for periodic transmission in a sidelink, according to an embodiment;
FIG. 9 is a diagram illustrating a method of performing partial sensing aperiodic transmission in a sidelink, according to an embodiment;
FIG. 10 is a diagram illustrating a method of performing inter-UE coordination in a sidelink, according to an embodiment;
FIG. 11a is a diagram illustrating an inactive time (or off-duration) and an active time (or on-duration) of DRX, which are determined according to a parameter configured for DRX, when DRX is performed in a sidelink, according to an embodiment;
FIG. 11b is a diagram illustrating an inactive time (or off-duration) and an active time (or on-duration) of DRX, which are determined according to a parameter configured for DRX, when DRX is performed in a sidelink, according to an embodiment;
FIG. 11c is a diagram illustrating an inactive time (or off-duration) and an active time (or on-duration) of DRX, which are determined according to a parameter configured for DRX, when DRX is performed in a sidelink, according to an embodiment;
FIG. 11d is a diagram illustrating an inactive time (or off-duration) and an active time (or on-duration) of DRX, which are determined according to a parameter configured for DRX, when DRX is performed in a sidelink, according to an embodiment;
FIG. 12 is a diagram illustrating a method of a terminal operation for sensing and resource selection when DRX is performed in a sidelink, according to an embodiment;
FIG. 13 is a diagram illustrating a resource selection window when a peer terminal, which transmits sidelink data to a terminal that performs DRX, operates in Mode2, according to an embodiment;
FIG. 14 is a diagram illustrating an example of a resource selection method when a peer terminal transmits sidelink data to a terminal that performs DRX, according to an embodiment;
FIG. 15 is a diagram illustrating a method of transmitting cooperation information of a terminal, according to information for inter-UE coordination;
FIG. 16 is a block diagram illustrating a configuration of a terminal, according to an embodiment;
FIG. 17 is a block diagram illustrating a configuration of a base station, according to an embodiment; and
FIG. 18 is a diagram illustrating a terminal operation according to whether a transmission (Tx) terminal performs periodic transmission, according to an embodiment.

### [Mode for the Invention]

Hereinafter, embodiments of the disclosure will be described in detail with reference to the accompanying drawings. The same or similar components may be designated by the same or similar reference numerals although they are illustrated in different drawings. Detailed descriptions of constructions or processes known in the art may be omitted to avoid obscuring the subject matter of the disclosure.

In the accompanying drawings, some elements may be exaggerated, omitted, or schematically illustrated. Further, the size of each element does not completely reflect the actual size.

The disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Further, each block of the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used herein, the term "unit" refers to a software element or a hardware element, such as a field programmable gate array (FPGA) or an application specific integrated circuit (ASIC), which performs a predetermined function. However, the term "unit" does not always have a meaning limited to software or hardware. A unit may be constructed either to be stored in an addressable storage medium or to execute one or more processors. Therefore, a unit includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by a unit may be either combined into a smaller number of elements, or a unit, or divided into a larger number of elements, or a unit. Moreover, the elements and units or may be implemented to reproduce one or more central processing units (CPUs) within a device or a security multimedia card. Further, a unit may include one or more processors.

The following detailed description of embodiments of the disclosure is mainly directed to NR as a RAN and packet core as a core network (5G system, 5G Core Network, or next generation (NG) core) which are specified in the 5G mobile communication standards defined by the 3rd generation partnership project (3GPP) LTE), but the disclosure may be applied to other communication systems having similar technical backgrounds through some modifications without significantly departing from the scope of the disclosure.

In the 5G system, a network data collection and analysis function (NWDAF) that is a network function for analyzing and providing data collected by a 5G network may be defined to support network automation. The NWDAF may collect information from the 5G network, store and analyze the collected information, and provide the result to an unspecified network function (NF), and the analysis result may be independently used by each NF.

In the following description, some of terms and names defined in the 3GPP standards (standards for 5G, NR, LTE, or similar systems) may be used for the convenience of description. However, the disclosure is not limited by these terms and names, and may be applied in the same way to systems that conform other standards.

Furthermore, in the following description, terms for identifying access nodes, terms referring to network entities, terms referring to messages, terms referring to interfaces between network entities, terms referring to various identification information, and the like are illustratively used for the sake of convenience. Therefore, the disclosure is not limited by the terms as used below, and other terms referring to subjects having equivalent technical meanings may be used.

To meet the demand for wireless data traffic having increased since deployment of 4G communication systems, efforts have been made to develop an improved 5G (NR) communication system. The 5G communication system has been designed to support ultrahigh frequency (mmWave) bands (e.g., 28GHz frequency bands) so as to accomplish higher data rates. To decrease propagation loss of the radio waves and increase the transmission distance in the ultrahigh frequency bands, beamforming, massive MIMO, FD-MIMO, array antenna, analog beam forming, large scale antenna techniques are discussed in 5G communication systems. In the 5G communication system supports, unlike LTE, various subcarrier spacings (SCSs) such as 30 kHz, 60 kHz, and 120 kHz, as well as 15 kHz, are supported, and a physical control channel uses polar coding and a physical data channel uses a low density parity check (LDPC). Furthermore, as waveforms for uplink transmission, not only a cyclic prefix (CP)-orthogonal frequency-division multiplexing (OFDM), but also a discrete Fourier transform (DFT)-spread (S)-OFDM are used. While hybrid automatic repeat request (HARQ) retransmission in units of transport blocks (TBs) are supported in LTE, HARQ retransmission based on a code block group (CBG) including a bundle of a plurality of code blocks (CBs) may be additionally supported in 5G.

In addition, in 5G communication systems, development for system network improvement is under way based on advanced small cells, cloud RANs, ultra-dense networks, D2D communication, wireless backhaul, V2X network, cooperative communication, CoMP, reception-end interference cancellation and the like.

As described above, a communication system may provide multiple services to a user, and in order to provide these multiple services to a user, there is a need for a method that can provide each service in the same time interval according to the characteristics thereof and a device using the same. Various services provided in the 5G communication system are being studied, and one of the services is a service that satisfies requirements for low latency and high reliability. In particular, in a case of vehicle communication, in an NR V2X system, D2D unicast communication, groupcast (or multi-cast) communication, and broadcast communication are supported. Unlike LTE V2X aiming at transmission or reception of basic safety information required for road driving of vehicles, NR V2X aims to provide more advanced services, such as platooning, advanced driving, an extended sensor, and remote driving.

Inter-UE coordination may be considered in a sidelink. Herein, inter-UE coordination may refer to providing a more improved sidelink service by sharing helpful information between terminals. Information shared for inter-UE coordination is not limited to specific information. For example, the information may include resource selection assistance information (RSAI). Various methods by which a terminal requests or provides inter-UE coordination information are provided.

In particular, in sidelink communication, DRX between terminals may be considered. When DRX is applied, battery efficiency can be increased by minimizing power consumption of a terminal. Specifically, power consumed by a terminal may be generated in the following procedures.
* Decoding of control information 1^{st} SCI transmitted through a physical sideline control channel (PSCCH): 1^{st} SCI includes terminal scheduling information, and thus, by decoding 1^{st} SCI, corresponding information may be used when performing sensing.
* Decoding of control information 2^{nd} SCI transmitted through a physical sideline shared channel (PSSCH): 2^{nd} SCI includes other control information that is not included in 1^{st} SCI.
* Decoding of data transmitted through PSSCH.

Therefore, when DRX is applied to a sidelink, in a time period configured as an inactive time, the terminal may not perform decoding of the control information and data information. On the other hand, when DRX is applied, only in a time period configured as an active time, the terminal may perform decoding of the control information and data information. Therefore, in a sidelink, successful data reception of a reception terminal may be guaranteed only when a transmission terminal transmits data in a period configured as a DRX active time of the reception terminal. In other words, in a sidelink, when a transmission terminal transmits data in a period configured as a DRX inactive of a reception terminal, the reception terminal may not receive a corresponding signal. In consideration of this point, the disclosure proposes methods of performing resource selection by a transmission terminal.

Embodiments are proposed to support the aforementioned scenario and, in particular, are to provide a method and a device for performing multi-antenna transmission in a sidelink.

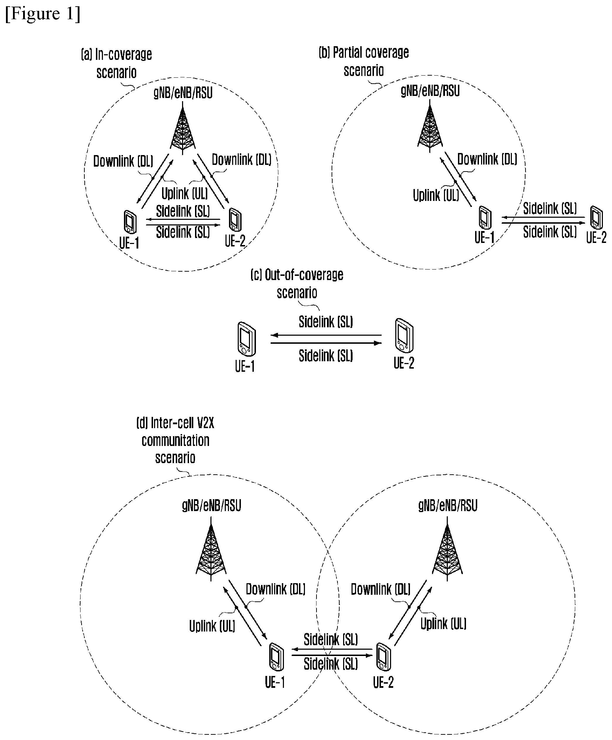

*55FIG. 1 is a diagram illustrating an example of a communication system to which an embodiment of the disclosure may be applied.

Referring to FIG. 1, an example of a case (in-coverage (IC)) in which all V2X terminals (UE-1 and UE-2) are located within coverage of a base station is illustrated in (a). All the V2X terminals may receive data and control information via a downlink (DL) from the base station or may transmit data and control information via an uplink (UL) to the base station. The data and control information may be data and control information for V2X communication. The data and control information may be data and control information for general cellular communication. The V2X terminals may transmit or receive data and control information for V2X communication via a sidelink.

Referring again to FIG. 1, an example of a case in which UE-1 among the V2X terminals is located within the coverage of the base station and UE-2 is located outside the coverage of the base station is illustrated in (b). That is, (b) illustrates an example of partial coverage (PC) in which a part (UE-2) of the V2X terminals is located outside the coverage of the base station. The V2X terminal (UE-1) located within the coverage of the base station may receive data and control information from the base station via a downlink or may transmit data and control information via an uplink to the base station. The V2X terminal (UE-2) located outside the coverage of the base station may not receive data and control information via a downlink from the base station, and may not transmit data and control information via an uplink to the base station. The V2X terminal (UE-2) may transmit or receive data and control information for V2X communication to or from the V2X terminal (UE-1) via a sidelink.

Referring back to FIG. 1, an example of a case in which all the V2X terminals are located outside (out-of-coverage (OOC)) the coverage of the base station is illustrated in (c). Therefore, the V2X terminals (UE-1 and UE-2) may not receive data and control information from the base station via a downlink, and may not transmit data and control information via an uplink to the base station. The V2X terminals (UE-1 and UE-2) may transmit or receive data and control information for V2X communication via a sidelink.

Referring to FIG. 1, an example of a scenario in which V2X communication is performed between the V2X terminals (UE-1 and UE-2) located in different cells is illustrated in (d). Specifically, (d) illustrates a case in which the V2X terminals (UE-1 and UE-2) are camping on (a radio resource control (RRC) disconnected state, or an RRC idle state) or connected to (an RRC connection state) different base stations. The V2X terminal (UE-1) may be a V2X transmission terminal and the V2X terminal (UE-2) may be a V2X reception terminal. Alternatively, the V2X terminal (UE-1) may be a V2X reception terminal, and the V2X terminal (UE-2) may be a V2X transmission terminal. The V2X terminal (UE-1) may receive a system information block (SIB) from a base station to which the V2X terminal (UE-1) is connected (or on which the V2X terminal (UE-1) is camping), and the V2X terminal (UE-2) may receive an SIB from another base station to which the V2X terminal (UE-2) is connected (or on which the V2X terminal (UE-2) is camping). In this case, an existing SIB or an SIB defined separately for V2X may be used as the SIB. Information of the SIB received by the V2X terminal (UE-1) and information of the SIB received by the V2X terminal (UE-2) may be different from each other. Therefore, in order to perform V2X communication between the terminals (UE-1 and UE-2) located in different cells, information may need to be unified, or information thereof is signaled so that a method of interpreting SIB information transmitted from each of different cells may be additionally required.

For convenience of description, FIG. 1 illustrates the V2X system including the V2X terminals (UE-1 and UE-2), but the disclosure is not limited thereto, and communication may be performed between more V2X terminals. An interface (UL and DL) between a base station and V2X terminals may be referred to as a Uu interface, and a sidelink between V2X terminals may be referred to as a PC5 interface. Therefore, these may be used interchangeably herein. A terminal may include a vehicle that supports vehicle-to-vehicle (V2V) communication, a vehicle or a pedestrian handset (e.g., a smartphone) that supports vehicle-to-pedestrian (V2P) communication, a vehicle that supports vehicle-to-network (V2N) communication, or a vehicle that supports communication between a vehicle and a transportation infrastructure (vehicle-to-infrastructure (V2I) communication). A terminal may include a road side unit (RSU) equipped with a terminal function, an RSU equipped with a base station function, or an RSU equipped with some of base station functions and some of terminal functions.

According to an embodiment of the disclosure, a base station may be a base station supporting both V2X communication and general cellular communication, or a base station supporting only V2X communication. The base station may be a 5G base station (gNB), a 4G base station (eNB), or an RSU. A base station may be referred to as an RSU.

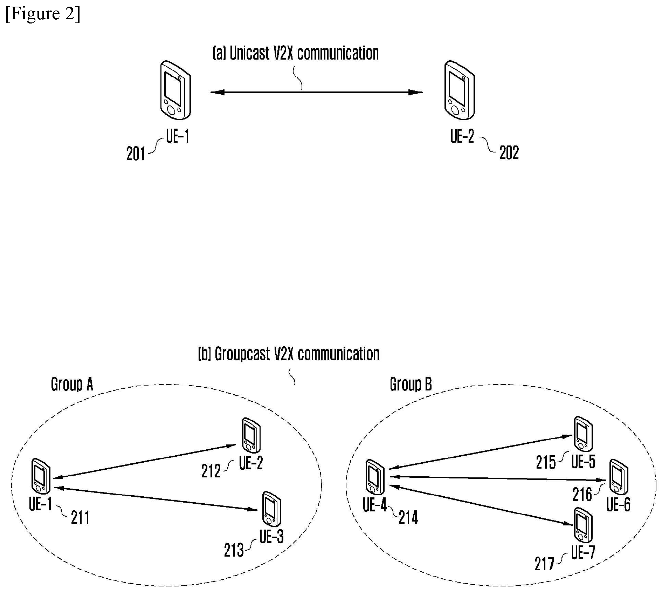

FIG. 2 is a diagram illustrating a V2X communication method performed via a sidelink, according to an embodiment.

In (a) of FIG. 2, UE-1 (e.g., a Tx terminal) 201 and UE-2 (e.g., a receive (Rx) terminal) 202 may perform one-to-one communication, and this may be referred to as unicast communication.

In (b) of FIG. 2, a Tx terminal and an Rx terminal may perform one-to-many communication, and this may be referred to as groupcast or multicast. UE-1 211, UE-2 212, and UE-3 213 may form one group (group A) to perform groupcast communication, and UE-4 214, UE-5 215, UE-6 216, and UE-7 217 may form another group (group B) to perform groupcast communication. Each terminal may perform groupcast communication only within a group to which each terminal itself belongs, and communication between different groups may be performed via unicast, groupcast, or broadcast communication. In (b) of FIG. 2, it is illustrated that two groups (group A and group B) are formed, but the disclosure is not limited thereto.

Although not illustrated in FIG. 2, V2X terminals may perform broadcast communication. Broadcast communication refers to a case in which all V2X terminals receive data and control information transmitted by a V2X transmission terminal via a sidelink. For example, if it is assumed in FIG. 2B that UE-1 211 is a transmission terminal for broadcast, all terminals (UE-2 212, UE-3 213, UE-4 214, UE-5 215, UE-6 216, and UE-7 217) may receive data and control information transmitted by UE-1 211.

In NR V2X, unlike in LTE V2X, support of a form in which a vehicle terminal transmits data to only one specific node via unicast and a form in which data is transmitted to specific multiple nodes via groupcast may be considered. For example, such unicast and groupcast technologies may be usefully used in a service scenario, such as platooning that is a technology of connecting two or more vehicles via a single network so as to move the vehicles in a cluster. Specifically, unicast communication may be required for the purpose of controlling one specific node by a leader node of a group connected via platooning, and groupcast communication may be required for the purpose of concurrently controlling a group including specific multiple nodes.

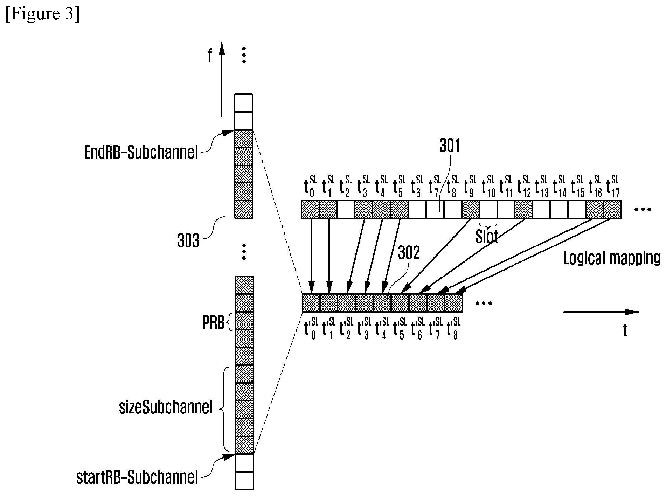

FIG. 3 is a diagram illustrating a resource pool defined as a set of resources on time and frequency used for sidelink transmission and reception, according to an embodiment.

In a resource pool, a resource granularity of a time axis may be a slot. A resource granularity of a frequency axis may be a sub-channel including one or more physical resource blocks (PRBs). Herein, an example of a case in which a resource pool is non-contiguously allocated in time is described, but a resource pool may be contiguously allocated in time. Also, an example of a case in which a resource pool is contiguously allocated in frequency is described, but a method in which a resource pool is non-contiguously allocated in frequency is not excluded.

Referring to FIG. 3, a case 301 in which a resource pool is non-contiguously allocated in time is illustrated. A case in which resource granularity in time is configured by slots is illustrated. First, a sidelink slot may be defined in slots used for an uplink. Specifically, a symbol length used for a sidelink in one slot may be configured as sidelink bandwidth part (BWP) information. Therefore, among the slots used for an uplink, slots in which a symbol length configured for a sidelink is not guaranteed may not be sidelink slots. In slots belonging to the resource pool, a slot in which a sidelink synchronization signal block (S-SSB) is transmitted is excluded. Referring to case 301, except for such slots, a set of slots available for a sidelink in time is illustrated as ( ${t}_{0}^{SL} , {t}_{1}^{SL} , {t}_{2}^{SL} , …$). Colored parts in case 301 indicate sidelink slots belonging to the resource pool. The sidelink slots belonging to the resource pool may be (pre-)configured with resource pool information via a bitmap. Referring to 302, a set of sidelink slots belonging to the resource pool in time is illustrated as ( ${t}_{0}^{′ SL} , {t}_{1}^{′ SL} , {t}_{2}^{′ SL} , …$). Herein, (pre-)configuration may refer to configuration information pre-configured for a terminal and stored in advance, or may refer to a case in which a terminal is configured in a cell-common manner from a base station. Cell-common may indicate that terminals within a cell receive configurations of the same information from a base station. In this case, a method in which a terminal acquires cell-common information by receiving a sidelink SIB (SL-SIB) from a base station may be considered. Further, it may also refer to a case in which a terminal is configured in a UE-specific manner after a RRC connection to a base station is established. UE-specific may be replaced with the term UE-dedicated, and may indicate that configuration information is received with a specific value for each terminal. A method in which a terminal acquires UE-specific information by receiving an RRC message from a base station may be considered. In addition, for (pre-)configuration, a method of configuration with resource pool information and a method of no configuration in resource pool information may be considered. In the case of (pre-)configuration with resource pool information, all terminals operating in a corresponding resource pool may operate with common configuration information, except for a case in which a terminal is configured in a UE-specific manner after an RRC connection with a base station is established. However, the method in which (pre-)configuration is not configured in resource pool information is basically a method of configuration independently of resource pool configuration information. For example, one or more modes may be (pre-)configured in the resource pool (e.g., A, B, and C), and information (pre-)configured independently of the resource pool configuration information may indicate a mode to be used (e.g., A, B, and C) from among the modes (pre-)configured in the resource pool.

Referring to 303 in FIG. 3, contiguous allocation of the resource pool in frequency is illustrated. On the frequency axis, resource allocation may be configured with sidelink BWP information and may be performed in units of sub-channels. A sub-channel may be defined as a resource granularity in frequency, which includes one or more PRBs. That is, a sub-channel may be defined to be an integer-multiple of PRB. Referring again to 303, the sub-channel may include five contiguous PRBs, and a sub-channel size (sizeSubchannel) may be a size of five contiguous PRBs. The content illustrated in FIG. 3 is exemplary, and a size of a sub-channel may be configured differently. It is common that one sub-channel is configured to have continuous PRBs but is not necessarily configured to have continuous PRBs. The sub-channel may be a basic resource granularity for a PSSCH. In reference numeral 303, startRB-Subchannel may indicate a start position of the sub-channel in frequency in the resource pool. When resource allocation is performed in units of sub-channels on the frequency axis, a resource in frequency may be allocated via configuration information on a resource block (RB) index (startRB-Subchannel) where the sub-channel starts, information (sizeSubchannel) on the number of PRBs constituting the sub-channel, the total number of sub-channels (numSubchannel), etc. Information on startRB-Subchannel, sizeSubchannel, and numSubchannel may be (pre-)configured with resource pool information in frequency.

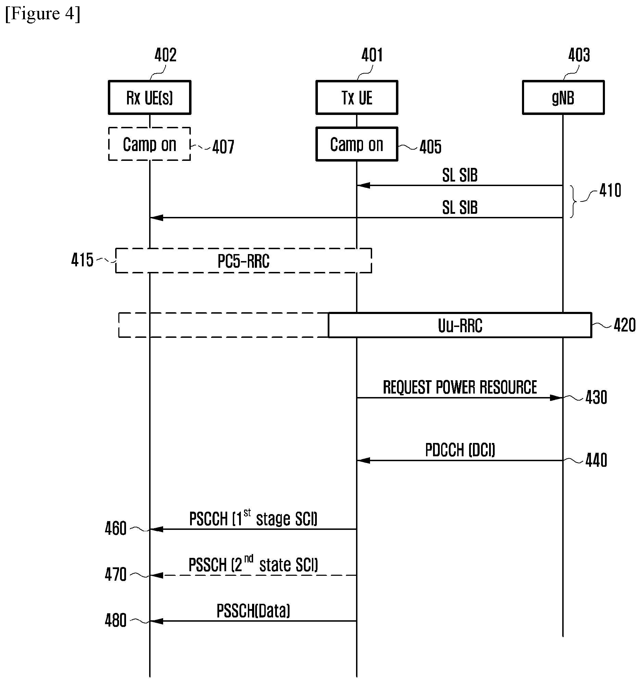

FIG. 4 is a sequence diagram illustrating a method for allocating a transmission resource in a sidelink by a base station, according to an embodiment.

A method of allocating a transmission resource by a base station in a sidelink is referred to as mode 1. Mode 1 may be scheduled resource allocation. Mode 1 may indicate a method in which a base station allocates resources used for sidelink transmission to RRC-connected terminals in a dedicated scheduling scheme. The method of mode 1 may be effective for interference management and resource pool management because a base station is able to manage sidelink resources.

Referring to FIG. 4, a transmission terminal (Tx UE) 401 may camp on 405 a base station (cell or gNB) 403. Camping on may refer to, for example, a state in which a terminal in a standby state (RRC_IDLE) may, as needed, select (or reselect) a base station (cell) and receive system information or paging information, etc.

If a reception terminal (Rx UE) 402 is located within the coverage of the base station 403, the reception terminal 402 may camp on 407 the base station 403. However, if the reception terminal 402 is located outside the coverage of the base station 403, the reception terminal 402 may not camp on the base station 403.

Herein, the reception terminal 402 represents a terminal receiving data transmitted by the transmission terminal 401.

The transmission terminal 401 and the reception terminal 402 may receive an SL-SIB from the base station 403, at 410. The SL-SIB information may include sidelink resource pool information for sidelink transmission or reception, parameter configuration information for sensing operation, information for configuration of sidelink synchronization, carrier information for sidelink transmission or reception operating at different frequencies, or the like.

If data traffic for V2X is generated in the transmission terminal 401, the transmission terminal 401 may be RRC-connected to the base station 403, at 420. The RRC connection between the terminal and the base station may be referred to as Uu-RRC. A Uu-RRC connection procedure 420 may be performed prior to data traffic generation of the transmission terminal 401. In mode 1, the transmission terminal may perform transmission to the reception terminal via a sidelink in a state where the Uu-RRC connection procedure 420 between the base station 403 and the reception terminal 402 has been performed. However, in mode 1, the transmission terminal may perform transmission to the reception terminal via a sidelink even in a state where the Uu-RRC connection procedure 420 between the base station 403 and the reception terminal 402 has not been performed.

The transmission terminal 401 may request at 430, from the base station, a transmission resource enabling V2X communication with the reception terminal 402. The transmission terminal 401 may request a sidelink transmission resource from the base station 403 by using a physical uplink control channel (PUCCH), an RRC message, or a medium access control (MAC) control element (CE). The MAC CE may be a buffer status report (BSR) MAC CE of a new format (at least including information on an indicator indicating a BSR for V2X communication and information on a size of data buffered for D2D communication), etc. The transmission terminal 401 may request a sidelink resource via a scheduling request (SR) bit transmitted through a PUCCH.

Subsequently, the base station 403 may allocate a V2X transmission resource to the transmission terminal 401. The base station may allocate the transmission resource in a dynamic grant scheme or a configured grant scheme.

First, in a case of the dynamic grant scheme, the base station may allocate a resource for TB transmission via downlink control information (DCI). Sidelink scheduling information included in the DCI may include parameters related to transmission time point and frequency allocation position information fields of initial transmission and retransmission. DCI for the dynamic grant scheme may be cyclic redundancy check (CRC) scrambled with SL-V-RNTI so as to indicate the dynamic grant scheme.

Subsequently, in a case of the configured grant scheme, the base station may periodically allocate a resource for TB transmission by configuring a semi-persistent scheduling (SPS) interval via Uu-RRC. The base station may allocate a resource for one TB via the DCI. The sidelink scheduling information for one TB included in the DCI may include parameters related to transmission time point and frequency allocation position information of initial transmission and retransmission resources. If a resource is allocated in the configured grant scheme, a transmission time point (occasion) and a frequency allocation position of initial transmission and retransmission for one TB may be determined by the DCI, and a resource for a subsequent TB may be repeated at SPS interval. DCI for the configured grant scheme may be CRC scrambled with SL-SPS-V-RNTI so as to indicate the configured grant scheme. The configured grant (CG) scheme may be classified into type1 CG and type2 CG. In a case of type2 CG, a resource configured by the configured grant via the DCI may be activated/deactivated.

Therefore, for mode 1, the base station 403 may indicate scheduling for sidelink transmission with the reception terminal 402 to the transmission terminal 401 via DCI transmission through a physical downlink control channel (PDCCH), at 440.

Specifically, there may be DCI format 3_0 or DCI format 3_1 for the DCI used by the base station 403 for sidelink communication for the transmission terminal 401. DCI format 3_0 may be defined as DCI for scheduling of an NR sidelink in one cell, and DCI format 3_1 may be defined as DCI for scheduling of an LTE sidelink in one cell.

In a case of broadcast transmission, the transmission terminal 401 may perform transmission without an RRC configuration 415 for a sidelink. Contrary to this, in a case of unicast or groupcast transmission, the transmission terminal 401 may perform RRC connection with another terminal on a one-to-one basis. As opposed to Uu-RRC, the RRC connection between terminals may be referred to as PC5-RRC 415. In the case of groupcast, PC5-RRC 415 may be individually connected between terminals in a group. Referring to FIG. 4, the connection of PC5-RRC 415 is illustrated as an operation after SL-SIB transmission 410, but the PC5-RRC connection may be made at any time before SL-SIB transmission 410 or before SCI transmission.

Subsequently, the transmission terminal 401 may transmit SCI (1st stage) to the reception terminal 402 through a PSCCH, at 460. Also, the transmission terminal 401 may transmit SCI (2nd stage) to the reception terminal 402 through the PSSCH, at 470. In this case, 1st stage SCI may include information related to resource allocation, and 2nd stage SCI may include other control information. Also, the transmission terminal 401 may transmit data to the reception terminal 402 through the PSSCH, at 480. In this case, the SCI (1st stage), the SCI (2nd stage), and the PSSCH may be transmitted together in the same slot.

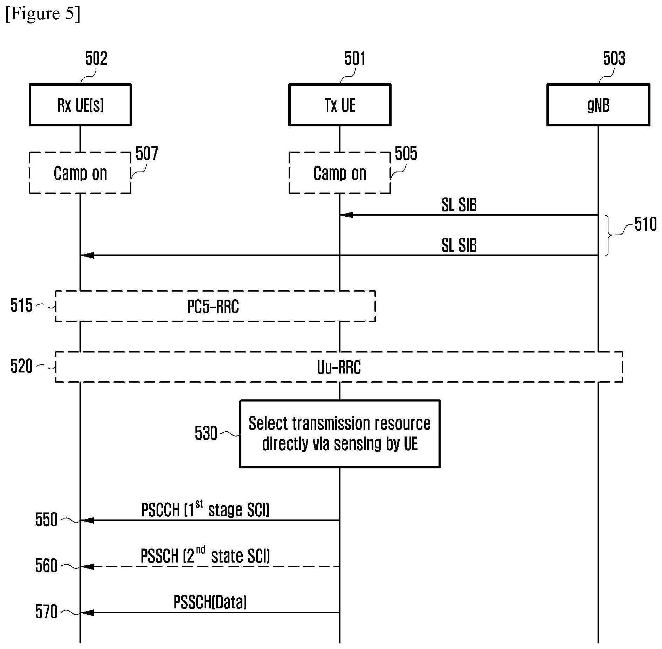

FIG. 5 is a sequence diagram illustrating a method by which a terminal directly allocates a sidelink transmission resource via sensing in a sidelink, according to an embodiment.

A method by which a terminal directly allocates a transmission resource of a sidelink via sensing in a sidelink is referred to as mode 2. Mode 2 may also be referred to as UE autonomous resource selection. In mode 2, a base station (gNB) 503 may provide, as system information, a sidelink transmission/reception resource pool for V2X, and a transmission terminal (Tx UE) 501 may select a transmission resource according to a determined rule. Unlike mode 1 in which a base station directly participates in resource allocation, the transmission terminal 501 autonomously selects a resource and transmits data, based on a resource pool received in advance via system information.

Referring to FIG. 5, the transmission terminal 501 may camp on the base station 503, at 505. Camping on may refer to, for example, a state in which a terminal in a standby state (RRC_IDLE) may, as needed, select (or reselect) a base station (cell) and receive system information or paging information, etc. Referring to FIG. 5, unlike aforementioned FIG. 4, in mode 2, if the transmission terminal 501 is located within the coverage of the base station 503, the transmission terminal 501 may camp on the base station 503. On the other hand, if the transmission terminal 501 is located outside the coverage of the base station 503, the transmission terminal 501 may not camp on the base station 503.

If a reception terminal (Rx UE) 502 is located within the coverage of the base station 503, the reception terminal 502 may camp on the base station (cell) 503, at 507. However, if the reception terminal 502 is located outside the coverage of the base station 503, the reception terminal 502 may not camp on the base station 503.

Herein, the reception terminal 502 represents a terminal receiving data transmitted by the transmission terminal 501.

The transmission terminal 501 and the reception terminal 502 may receive an SL-SIB from the base station 503, at 510. The SL-SIB information may include sidelink resource pool information for sidelink transmission or reception, parameter configuration information for sensing operation, information for configuring sidelink synchronization, carrier information for sidelink transmission or reception operating at different frequencies, or the like.

A difference between FIG. 4 and FIG. 5 is that the base station 403 and the terminal 401 operate in the RRC connected state in FIG. 4, whereas the terminal may operate even in an idle mode 520 (an RRC disconnected state) in FIG. 5. Even in the RRC connected state 520, the base station 503 may allow, without directly participating in resource allocation, the transmission terminal 501 to autonomously select a transmission resource. Here, the RRC connection between the terminal 501 and the base station 503 may be referred to as Uu-RRC 520. When data traffic for V2X is generated in the transmission terminal 501, the transmission terminal 501 may be configured with a resource pool via system information received from the base station 503, and the transmission terminal 501 may directly select at 530 a resource of a time/frequency domain via sensing within the configured resource pool. When a resource is finally selected, the selected resource is determined as a grant for sidelink transmission.

In a case of broadcast transmission, the transmission terminal 501 may perform transmission without an RRC configuration 515 for a sidelink. Contrary to this, in a case of unicast or groupcast transmission, the transmission terminal 501 may perform RRC connection with another terminal on a one-to-one basis. As opposed to Uu-RRC, the RRC connection between terminals may be referred to as PC5-RRC 515. In the case of groupcast, PC5-RRC 515 may be individually connected between terminals in a group. Referring to FIG. 5, the connection of PC5-RRC 515 is illustrated as an operation after SL-SIB transmission 510, but the PC5-RRC connection may be made at any time before SL-SIB transmission 510 or before SCI transmission.

Subsequently, the transmission terminal 501 may transmit SCI (1st stage) to the reception terminal 502 through a PSSCH, at 550. Also, the transmission terminal 501 may transmit SCI (2nd stage) to the reception terminal 502 through the PSSCH, at 560. In this case, 1st stage SCI may include information related to resource allocation, and 2nd stage SCI may include other control information. Also, the transmission terminal 501 may transmit data to the reception terminal 502 through the PSSCH, at 570. In this case, the SCI (1st stage), the SCI (2nd stage), and the PSSCH may be transmitted together in the same slot.

Specifically, the SCI used by the transmission terminals 401 and 501 for sidelink communication with the reception terminals 402 and 502 is SCI (1st stage) and may include SCI format 1-A. SCI (2nd stage) may include SCI format 2-A or SCI format 2-B. In the SCI (2nd stage), if HARQ feedback is not used, or if HARQ feedback is used and both ACK information and NACK information are included, SCI format 2-A may include information for PSSCH decoding so as to be used. However, if HARQ feedback is not used, or if HARQ feedback is used and only NACK information is included, SCI format 2-B may include information for PSSCH decoding so as to be used. For example, SCI format 2-B may be limitedly used for groupcast transmission.

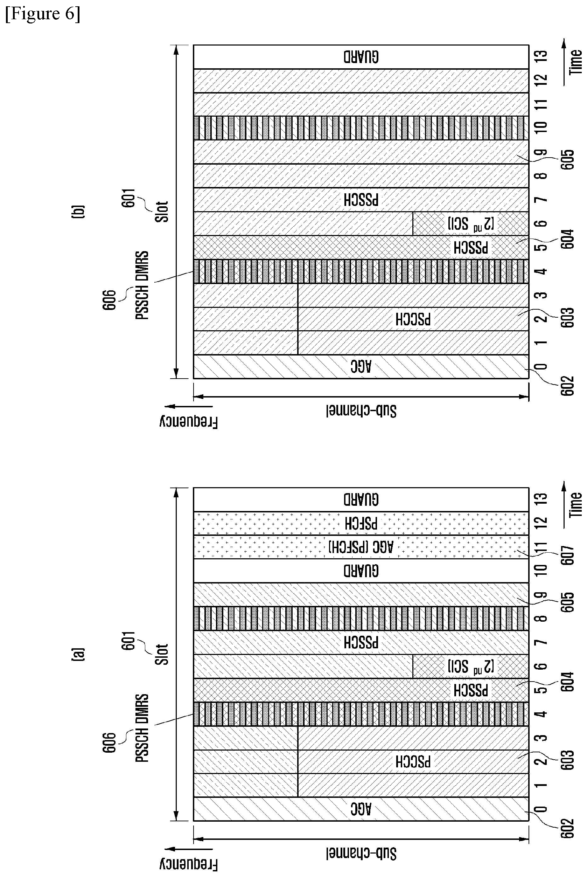

FIG. 6 is a diagram illustrating a mapping structure of physical channels mapped to one slot in a sidelink, according to an embodiment.

Specifically, mapping for physical channels of PSCCH/PSSCH/physical sidelink feedback channel (PSFCH) is illustrated in FIG. 6. In a case of a PSFCH, when HARQ feedback of a sidelink is activated in a higher layer, a time resource of the PSFCH may be (pre-)configured with resource pool information. The time resource in which the PSFCH is transmitted may be (pre-)configured to be one value of every 0, 1, 2, and 4 slots. Here, "0" indicates that no PSFCH resource is used. 1, 2, and 4 may indicate that a PSFCH resource is transmitted in every 1, 2, and 4 slots, respectively. A structure of a slot in which no PSFCH resource is configured is illustrated in (a) of FIG. 6, and a structure of a slot in which a PSFCH resource is configured is illustrated in (b) of FIG. 6. A PSCCH/PSSCH/PSFCH may be allocated to one or more sub-channels in frequency. For details on sub-channel allocation, reference is made to the descriptions in FIG. 3. Subsequently, referring to FIG. 6 in order to describe mapping in time for a PSCCH/PSSCH/PSFCH, one or more symbols before a transmission terminal transmits the PSCCH/PSSCH/PSFCH in a corresponding slot 601 may be used as an area 602 for automatic gain control (AGC). When the corresponding symbol(s) is used for AGC, a method of repetitively transmitting a signal of another channel in a corresponding symbol area may be considered. Some of PSCCH symbols or PSSCH symbols may be considered for a repetitive signal of another channel. Alternatively, a preamble may be transmitted in the AGC area. When a preamble signal is transmitted, it is advantageous that an AGC execution time may be further shortened compared to a method of repetitively transmitting a signal of another channel. When a preamble signal is transmitted for AGC, a specific sequence may be used as the preamble signal 602, and in this case, a sequence, such as a PSSCH demodulation reference signal (DMRS), a PSCCH DMRS, and a channel state information reference signal (CSI-RS), may be used as the preamble. In the disclosure, a sequence used as a preamble is not limited to the above-described example. Additionally, according to FIG. 6, control information related to resource allocation to initial symbols of the slot may be transmitted on a PSCCH 603 via 1st stage SCI, and other control information may be transmitted in a PSSCH area 604 via 2nd stage SCI. Data scheduled by the control information may be transmitted on a PSSCH 605. In this case, a position in time at which the 2nd stage SCI is transmitted may be mapped from a symbol in which a first PSSCH DMRS 606 is transmitted. The position in time at which the PSSCH DMRS 606 is transmitted may be different in a slot in which the PSFCH is transmitted and a slot in which no PSFCH is transmitted, as illustrated in FIG. 6A and FIG. 6B. FIG. 6A illustrates that a PSFCH 607, which is a physical channel for transmission of feedback information, is located in the last part of the slot. By securing a predetermined vacant time (guard) between the PSSCH 605 and the PSFCH 607, the terminal having transmitted or received the PSSCH 605 may prepare to transmit or receive the PSFCH 607. After transmission or reception of the PSFCH 607, a period (guard) vacant for a predetermined time may be secured.

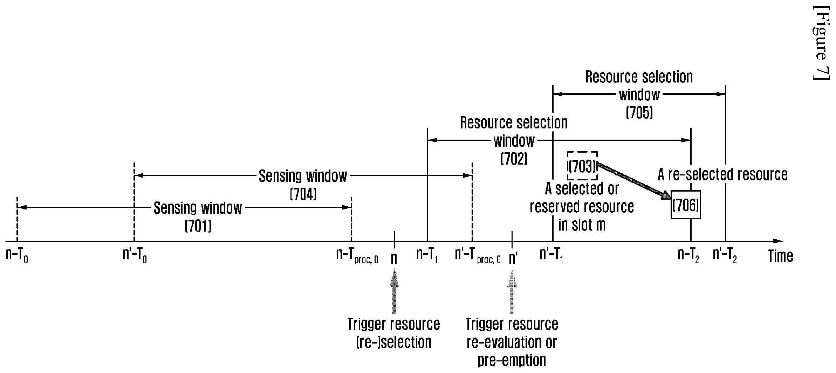

FIG. 7 is a diagram for defining a sensing window and a resource selection window necessary for a terminal to perform resource (re)selection and re-evaluation for resource allocation in a sidelink in a case of full sensing operation, according to an embodiment.

When triggering for resource (re)selection is made at time point n, a sensing window 701 may be defined to be [n-T₀, n-T_{proc,0}]. Here, T₀ is a start point of the sensing window and may be (pre-)configured with resource pool information. T₀ may be defined to be a positive integer in ms. Herein, T₀ is not limited to a specific value. T_{proc,0} may be defined to be time required to process a sensed result. In the disclosure, a value configured to be T_{proc,0} is not limited to a specific value. For example, T_{proc,0} may be defined to be a positive integer in ms or in units of slots.

Subsequently, when triggering for resource (re)selection is made at time point n, a resource selection window 702 may be determined to be [n+T₁, n+T₂]. Here, T₁ is a value in units of slots and may be selected by terminal implementation with respect to T₁≤T_{proc,1}. T_{proc,1} may be defined to be a maximum reference value in consideration of a processing time required to select a resource. For example, T_{proc,1} may be defined to be a different value according to SCS in units of slots. Herein, a value configured to be T_{proc,1} is not limited to a specific value. T₂ is a value in units of slots and may be selected by a terminal within a range that satisfies T₂ₘᵢₙ≤T₂≤ᵣemaining packet delay budget(PDB). T₂ₘᵢₙ is to prevent the terminal from selecting T₂ having an excessively small value. A T₂ₘᵢₙ value may be configured to be "T₂ₘᵢₙ(prio_{TX})" via a higher layer according to a priority (prio_{TX}) and SCS of a transmission terminal. The terminal may select a transmission resource in the resource selection window 702.

FIG. 7 illustrates an example in which triggering for resource (re)selection is made at time point n, and triggering for re-evaluation and pre-emption is made at time point n'(n'>n) by continuously performing sensing even after time point n. Specifically, triggering for resource (re)selection is made at time point n, sensing is continuously performed after selecting a transmission resource, and if it is determined that the selected resource is not suitable for transmission, re-evaluation may be triggered at time point n'(n'>n). When a resource reserved by the terminal overlaps with a resource reserved by another terminal, if a priority of the resource reserved by another terminal is high and an interference to the resource is measured to be high, pre-emption may be triggered at time point n'(n'>n). In this case, a resource 703 selected and reserved by resource (re)selection at time point n may be changed to another resource 706. FIG. 7 illustrates both a sensing window 704 and a resource selection window 705 for time point n' (n'>n) at which re-evaluation and pre-emption are triggered.

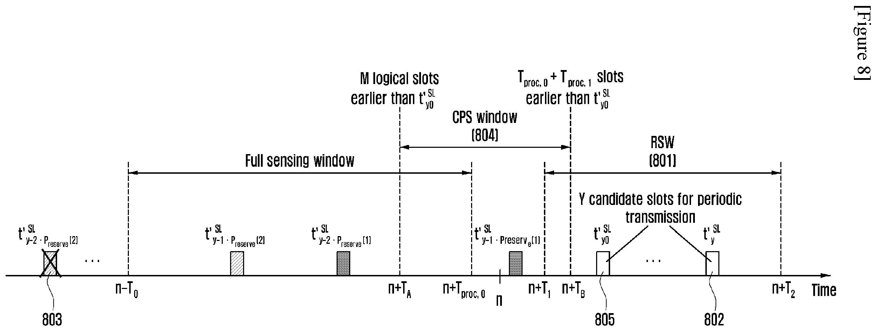

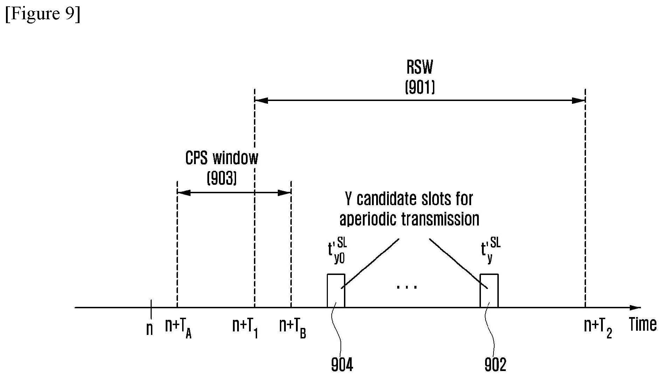

FIG. 8 and FIG. 9 illustrate a method of performing partial sensing in a sidelink, according to an embodiment of the disclosure. Unlike full sensing in FIG. 7, FIG. 8 and FIG. 9 illustrate different methods of determining a slot for performing sensing when a terminal operates with partial sensing. It is noted, however, that the disclosure is not limited to the methods presented with reference to FIG. 8 and FIG. 9. It is noted that, in FIG. 8 and FIG. 9, when partial sensing is performed, a resource selection window (RSW) 801 or 901 may be determined as described via the resource selection window 702 of FIG. 7.

First, referring to FIG. 8, a method of performing partial sensing is presented. The method presented with reference to FIG. 8 may correspond to a partial sensing method performed when periodic resource reservation is performed. In other words, the method is a partial sensing method for periodic transmission. However, it is noted that the method presented with reference to FIG. 8 may be referred to as another term. Referring to FIG. 8, Y(≥1) candidate slots may be selected in the RSW 801. The Y candidate slots may be selected contiguously or non-contiguously in time in the resource selection window. A minimum value of Y may be (pre-)configured. Final selection of the Y value and a slot to be selected may be determined by terminal implementation. In this case, one of the Y candidate slots may be defined to be ${t}_{y}^{′ SL}$ as shown in 802. As described with reference to FIG. 3, ${t}_{y}^{′ SL}$ may indicate a sidelink slot belonging to a resource pool. In this case, a slot for performing sensing may be determined to be ${t}_{y - k \times {P}_{reserve}}^{′ SL}$. The sensing may be referred to as periodic-based partial sensing (PBPS). Here, vector y indicates Y candidate slots, and may be expressed as y in a case of a single slot, as shown in FIG. 8. Vector *Pᵣₑₛₑᵣᵥₑ* which is a value corresponding to a periodic reservation interval may include one or more values, and may be expressed as *Pᵣₑₛₑᵣᵥₑ* in a case of a single value, as shown in FIG. 8. A value included in *Pᵣₑₛₑᵣᵥₑ* may be determined from sl-ResoureReservePeriodList, which is a list of periodic reservation intervals (pre-)configured in the resource pool, and the following methods may be considered. It is noted, however, that the disclosure is not limited to only the following methods.

* Method 1: All values included in sl-ResoureReservePeriodList are used.

* Method 2: Only some (subset of) values included in sl-ResoureReservePeriodList are used.

* Method 3: A common divisor of values included in sl-ResoureReservePeriodList is used.

In addition, Vector *k* in ${t}_{y - k \times {P}_{reserve}}^{′ SL}$ is a value for determination of the number of slots for performing partial sensing, and an interval between sensing slots may be determined by a reservation interval included in *P_{reserve.}* In FIG. 8, cases where k is 1 and where k is 2 are illustrated for two *Pᵣₑₛₑᵣᵥₑ* values of *Pᵣₑₛₑᵣᵥₑ*(1) and *Pᵣₑₛₑᵣᵥₑ*(2). As a method of determining *k* , it may be basically assumed that k=1. However, (pre-)configuration may be performed so that k=2. Even when k=2, as 803 illustrated in FIG. 8, if the sensing slot exceeds T₀, the corresponding slot may not be monitored. As illustrated in FIG. 8, continuous partial sensing (CPS) may be additionally performed in CPS window 804. Window [*n*+*T_{A}*, *n*+*T_{B}*] in which CPS is performed may be defined to be a time period ranging from a slot corresponding to *M* logical slots earlier than ${t}_{y 0}^{′ SL}$ 805 to a slot that is *T*_{*proc,*0}+*T*_{*proc,*1} earlier than ${t}_{y 0}^{′ SL}$ 805, the ${t}_{y 0}^{′ SL}$ 805 corresponding to a first slot in time from among Y candidate slots. Here, a value of *M* may be basically assumed to be 31, and a specific value may be (pre-)configured. If *M*=O is (pre-)configured, it may assumed that CPS is not performed.

Referring to FIG. 9, another method of performing partial sensing is presented. The method presented with reference to FIG. 9 is a partial sensing method for non-periodic transmission rather than partial sensing for periodic transmission shown in FIG. 8, and may be applied when periodic resource reservation is not performed. Unlike FIG. 8, Y'(≥1) candidate slots may be selected in the resource selection window (RSW) 901. The Y' candidate slots may be selected contiguously or non-contiguously in time in the resource selection window. A minimum value of Y' may be (pre-)configured. Final selection of the Y' value and a slot to be selected may be determined by terminal implementation. In this case, one of the Y' candidate slots may be defined to be ${t}_{y}^{′ SL}$ as shown in 902. As described with reference to FIG. 3, ${t}_{y}^{′ SL}$ may indicate a sidelink slot belonging to a resource pool. In this case, a slot for performing sensing may be determined to be ${t}_{y - k \times {P}_{reserve}}^{′ SL}$ as in FIG. 8. The sensing may be referred to as periodic-based partial sensing (PBPS). As illustrated in FIG. 9, CPS may be additionally performed in CPS window 903. Window [*n*+*T_{A}*, *n*+*T_{B}*] in which CPS is performed may be defined to be a time period ranging from a slot corresponding to *M* logical slots earlier than ${t}_{y 0}^{′ SL}$ 904 to a slot that is *T_{proc,0}*+*T*_{*proc,*1} earlier than ${t}_{y 0}^{′ SL}$ 904, the ${t}_{y 0}^{′ SL}$ 904 corresponding to a first slot in time from among Y' candidate slots. A value of *M* may be basically assumed to be 31, and a specific value may be (pre-)configured. If *M*=O is (pre-)configured, it may assumed that CPS is not performed. However, unlike in FIG. 8, a starting point of the CPS window may be restricted to slot n or later.

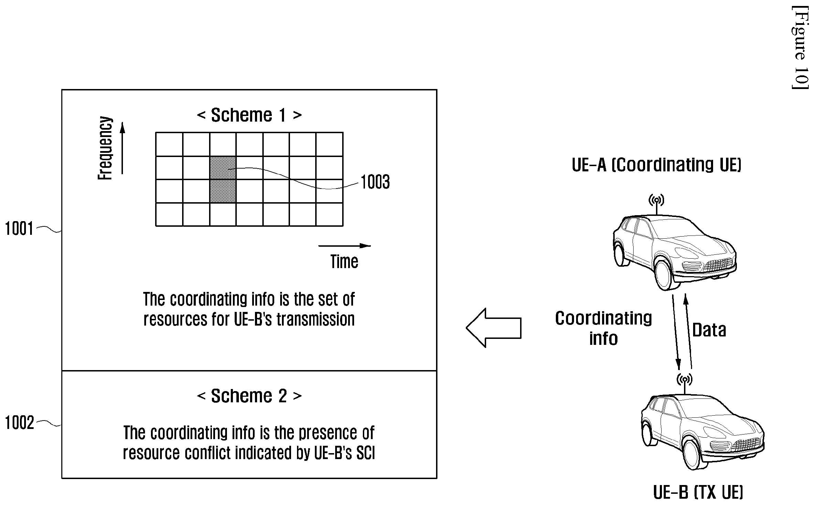

FIG. 10 is a diagram illustrating two methods of performing inter-UE coordination, according to an embodiment.

According to inter-UE coordination method 1 1001, UE-A may provide UE-B with set information 1003 of time-frequency resource allocation that is suitable (preferred) or unsuitable (non-preferred) for transmission. In contrast, according to inter-UE coordination method 2 1002, UE-A may provide UE-B only with an indication of whether resources reserved by UE-B via SCI are suitable. For inter-UE coordination method 1, since UE-A needs to signal, to UE-B, set information 1003 of time-frequency resource allocation, signaling overhead may be increased compared to inter-UE coordination method 2. For inter-UE coordination method 2, since UE-A provides UE-B only with an indication of whether resources reserved by UE-B via SCI are suitable, the suitability may be indicated with, for example, 1-bit information.

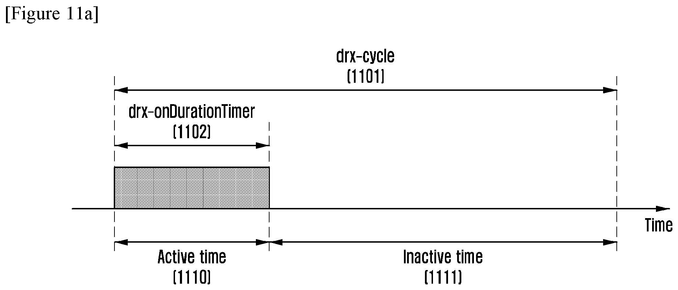

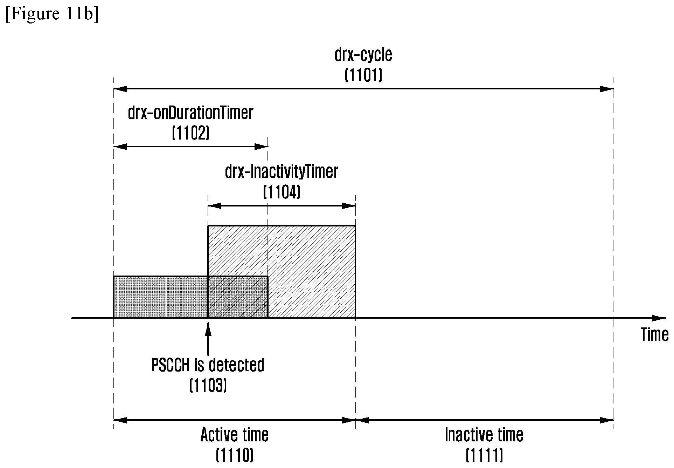

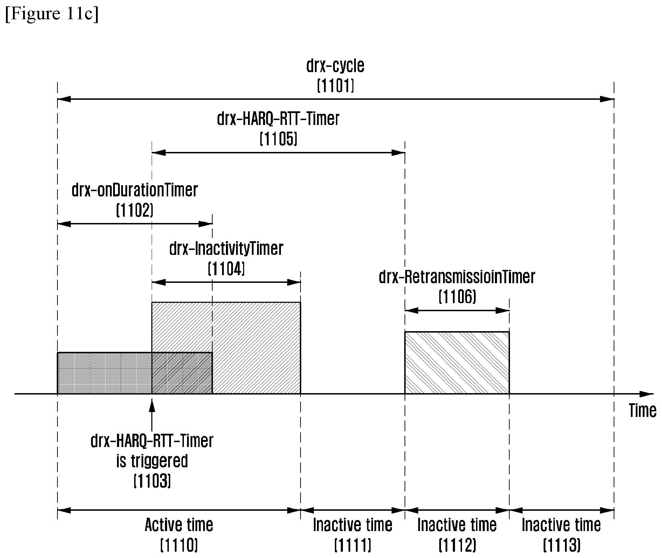

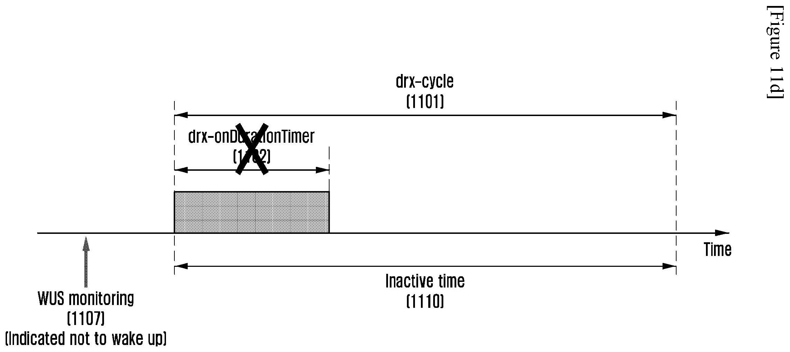

FIG. 11 is a diagram illustrating an inactive time (or off-duration) and an active time (or on-duration) of DRX, which are determined according to a parameter configured for DRX, when DRX is performed in a sidelink, according to an embodiment. A terminal may perform decoding of control information and data information for data reception in a period corresponding to an active time of DRX. However, decoding of control information and data information for data reception may not be performed in a period corresponding to an inactive time of DRX. In a sidelink, there are 1^{st} SCI which is control information transmitted through a PSCCH, and 2^{nd} SCI which is control information transmitted through a PSSCH. In addition, data information may be transmitted through a PSSCH. It may be assumed that control information and data information are always transmitted concurrently in a sidelink. Therefore, a time point (slot) at which control information is received may be the same as a time point (slot) at which data information is received.

The following may be parameters for determining an inactive time and an active time for sidelink DRX. However, parameters for determination of an inactive time and an active time for DRX are not limited to the parameters presented below. In addition, it is noted that some of the parameters below may not be used in sidelink DRX.

### DRX-related parameters

* drx-cycle: indicates a period in which DRX is applied, and a start position (drx-StartOffset) of a drx-cycle 1101 may be configured. As shown in FIGS. 11A-11D, periods of an inactive time 1110 and an active time 1111 may be configured within drx-cycle. drx-cycle having a long cycle and drx-cycle having a short cycle may be configured in a sidelink.
* drx-onDurationTimer: drx-onDurationTimer is an active time (or on-duration) operating duration of DRX in the drx-cycle 1101, and may correspond to the active time 1110 of DRX until drx-onDurationTimer 1102 operates and expires. The remaining period of drx-cycle 1101 from a time point at which a drx-onDurationTimer 1102 expires may be the inactive time 1111 of DRX. An example of a case where the inactive time 1110 and the active time 1111 of DRX are operated when only the drx-onDurationTimer 1102 is defined in a sidelink is illustrated in FIG. 11A.
* drx-InactivityTimer: If SCI is received at 1103 before the drx-onDurationTimer 1102 expires within the drx-cycle 1101, the active time 1110 of DRX may be extended from a time point at which the control information is received to a time when a drx-InactivityTimer 1104 operates and expires. The remaining period of drx-cycle 1101 from a time point at which the drx-onDurationTimer 1104 expires may be the inactive time 1111 of DRX. An example of a case where the inactive time 1110 and the active time 1111 of DRX are operated when the drx-onDurationTimer 1102 and the drx-InactivityTimer 1104 are defined in a sidelink is illustrated in FIG. 11B.
* drx-HARQ-RTT-Timer: When retransmission is performed in a sidelink, a drx-HARQ-RTT-Timer 1105 may be triggered at 1103 within the active time 1111 of DRX for the terminal. A condition for triggering the drx-HARQ-RTT-Timer 1105 in a sidelink is that, when SCI is received, or when SCI is received and position information for retransmission is indicated in the SCI (1^{st} SCI), the drx-HARQ-RTT-Timer 1105 may be applied until the next retransmission is received according to the corresponding information. When the drx-HARQ-RTT-Timer 1105 expires, the terminal may operate in the active time 1111 of DRX in order to receive retransmission. In this case, the active time 1111 of DRX may be a period in which a drx-RetransmissionTimer 1106 operates. As described above, since position information (including information on the presence or absence of retransmission resources) of initial transmission and retransmission resources is indicated in 1^{st} SCI, the drx-HARQ-RTT-Timer 1105 may be assumed and defined to be a time gap between retransmission resources or a time gap between initial transmission and retransmission resources indicated via the 1^{st} SCI. If it is indicated that there is no retransmission resource in the received 1^{st} SCI, the drx-HARQ-RTT-Timer 1105 may not operate. An example of a case where the inactive time 1110 and the active time 1111 of DRX are operated when the drx-onDurationTimer 1102, the drx-InactivityTimer 1104, the drx-HARQ-RTT-Timer 1105, and the drx-RetransmissionTimer 1106 are defined in a sidelink is illustrated in FIG. 11C.
* drx-RetransmissionTimer: When retransmission is performed in a sidelink, the drx-RetransmissionTimer 1106 may operate from a time point at which the drx-HARQ-RTT-Timer 1105 expires. Therefore, the drx-RetransmissionTimer 1106 does not operate in a period during which the drx-HARQ-RTT-Timer 1105 operates. In addition, in a sidelink, the drx-RetransmissionTimer 1106 may be determined to be a fixed value of one slot or one subframe. In this case, the drx-RetransmissionTimer 1106 may not be defined. The disclosure is not limited thereto. That is, in a sidelink, the drx-RetransmissionTimer 1106 may be configured to be one or more slots or one or more subframe values. Therefore, as shown in FIG. 11C, a period in which the drx-RetransmissionTimer 1106 operates may be configured to be an active time 1112 of DRX so that retransmission of a peer terminal may be received. In addition, the remaining drx-cycle period may be configured to be an inactive time 1113 of DRX, and the terminal may not receive control information and data information.
* drx-SlotOffset: When a variety of SCS is supported, the SCS may be used for the purpose of adjusting a starting position to which sidelink DRX is applied.
* Wake-up signal (WUS) cycle: When a WUS is used in a sidelink, a WUS cycle may be configured. It may be assumed that the WUS is transmitted according to the WUS cycle, and the terminal may perform monitoring at 1107 for the WUS at a position where the WUS is transmitted. Referring to FIG. 11D, an example of determining an inactive time and an active time of DRX when a WUS is used is illustrated. As shown in FIG. 11D, if a WUS indicates, at 1107, that the terminal does not wake up, the terminal may not operate the drx-onDurationTimer 1102 in the drx-cycle 1101, and all drx-cycle periods may be configured to be the DRX inactive time 1110. Alternatively, if a WUS indicates, at 1107, that the terminal wakes up, the terminal may perform operations as shown in FIG. 11A, FIG. 11B, or FIG. 11C, according to the configured DRX parameters.

Based on the above descriptions, an active time (or on-duration) in DRX may be defined according to when a DRX cycle is configured in a sidelink, an active time (or on-duration), and/or when drx-onDurationTimer, drx-InactivityTimer, or drx-RetransmissionTimer is operating.

As described above, some of the parameters may not be used in sidelink DRX. Alternatively, other parameters may be considered. This may vary depending on a transmission method of sidelink broadcast, unicast, or groupcast. In addition, the parameter information configuration method is not limited to a specific method. Corresponding information may be (pre-)configured, and in a case of unicast, corresponding information may be configured via PC5-RRC or sidelink MAC-CE.

A mode 2 sensing and resource selection method of a terminal is provided when DRX is operated in a sidelink via the following embodiments (FIGS. 11A-11D). In addition, a method for inter-UE coordination in a sidelink is also proposed.

In a first embodiment, a terminal operation method for sensing and resource selection when DRX is performed in a sidelink is provided.

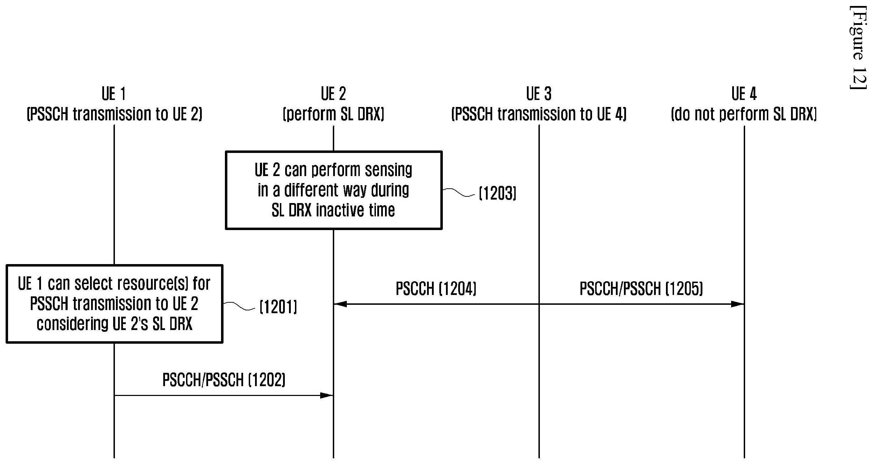

Specifically, according to FIG. 12, four terminals are illustrated that perform transmission or reception in a sidelink, according to an embodiment of the disclosure. In FIG. 12, UE 1 is a terminal that performs sidelink data transmission (i.e., PSSCH transmission), to UE 2, and UE 2 may be a terminal that performs sidelink DRX. As described above, in a sidelink, if UE 1 transmits sidelink data to UE 2 in a period in which UE 2 operates in a DRX inactive time e.g., in the time period, UE 2 may not perform decoding of control information and data information), UE 2 may not receive the data. Therefore, at 1201, when the peer terminal transmitting sidelink data to the terminal performing DRX selects a resource by performing Mode2 sensing, it is necessary to perform resource selection so that the reception terminal is able to receive the transmission data. For detailed methods, reference is made to the following second and third embodiments. In addition, UE 1 may select a resource determined via resource selection considered at 1201 and may transmit a PSCCH/PSSCH 1202 to UE 2. Subsequently, in FIG. 12, UE 2 is a terminal which performs sidelink DRX, and sensing at an inactive time and sensing at an active time of sidelink DRX may be the same or may not be the same. If sensing at the inactive time and sensing at the active time of sidelink DRX are the same, FIG. 7 to FIG. 10 may be referred to by for detailed methods. Alternatively, sensing may be performed in different manners, at 1203. This is due to DRX being an operation to reduce power consumption of the terminal. For detailed methods, reference is made to the following fourth embodiment. For reference, in FIG. 12, UE 3 is a terminal which attempts to perform sidelink data transmission, (i.e., PSSCH transmission 1205), to UE 4, wherein UE 4 may be a UE that does not perform sidelink DRX. In this case, in a period for sensing of a PSCCH 1204 transmitted by UE 3, UE 2 may perform sensing by reception and decoding, regardless of DRX.

In a second embodiment, at 1201 of FIG. 12, a method by which a peer terminal transmitting sidelink data to a terminal performing DRX selects a resource by performing Mode2 sensing is provided.

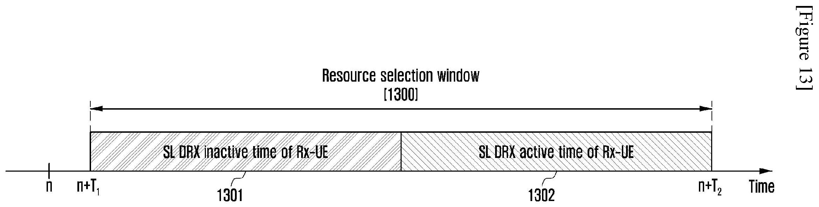

FIG. 13 is a diagram illustrating a resource selection window when a peer terminal, which transmits sidelink data to a terminal that performs DRX, operates in Mode2, according to an embodiment.

Referring to FIG. 13, when a peer terminal transmitting sidelink data to a terminal performing DRX determines a resource selection window 1300, a part of the time domain of the resource selection window may correspond to an inactive time 1301 of the terminal performing DRX, and another part of the time domain may correspond to an active time 1302 of the terminal performing DRX. As described above, the terminal performing DRX may not perform decoding of control information and data information in a time period corresponding to a DRX inactive time. Therefore, if the peer terminal transmitting sidelink data to the terminal performing DRX transmits sidelink data in a time period corresponding to the DRX inactive time of the terminal performing DRX, the terminal performing DRX may not receive the data.

Herein, it is assumed that, when the peer terminal transmits sidelink data to the terminal performing DRX, the peer terminal may know DRX configuration information of the terminal performing DRX. Therefore, it is assumed that the peer terminal may identify the DRX active time or DRX inactive time of the terminal performing DRX. Specifically, for broadcast or groupcast transmission, a DRX configuration may be (pre-)configured when not connected to a base station, and may be configured via an SIB transmitted by a base station in a cell-common manner when connected to the base station. Alternatively, for unicast transmission, via PC5-RRC, a Tx terminal may indicate a DRX configuration to an Rx terminal, or an Rx terminal may indicate a DRX configuration to a Tx terminal. Therefore, it is assumed that a terminal receives DRX configuration information via a higher layer of the terminal, and based on this, the terminal may identify its own DRX configuration information and DRX configuration information of another terminal.

When the peer terminal transmits sidelink data to the terminal performing DRX, the following resource selection method may be considered. The following methods are merely for illustrative purposes, and the resource selection method in the disclosure is not limited to the following methods.
* Method 1: When a terminal selects a set of candidate resources via a mode 2 operation and reports the same to a higher layer of the terminal, all resources included in the set need to be resources included in a time period corresponding to a DRX active time of an Rx terminal.
* Method 2: When a terminal selects a set of candidate resources via a mode 2 operation and reports the same to a higher layer of the terminal, some of resources included in the set may be included in a time period corresponding to a DRX active time of an Rx terminal, and some of the other resources included in the set may not be included in the time period corresponding to the DRX active time of the Rx terminal.

When the set of candidate resources is reported from a physical layer of the terminal to a higher layer of the terminal, the higher layer of the terminal may randomly select a transmission resource from the candidate resources included in the set of candidate resources. In this case, not only an initial transmission resource, but also a retransmission resource, may be selected. If an initial transmission resource and a retransmission resource are selected, a resource positioned earlier in time from among randomly selected resources may be the initial transmission resource and a resource positioned later in time may be the retransmission resource. When method 1 is used, it may be guaranteed that a transmission resource is always selected to be in a DRX active time of an Rx terminal, and therefore a case where sidelink data transmitted by a Tx terminal is transmitted in a DRX inactive time of the Rx terminal can be prevented. However, if an area corresponding to 1302 in FIG. 13 is small, it may be difficult to secure a sufficient quantity of candidate resources included in the set of candidate resources. In general, only when a sufficient quantity of candidate resources included in the set of candidate resources is guaranteed, a probability of collision with a resource selected by another terminal can be reduced when the set of candidate resources is reported to a higher layer of the terminal and random selection is thus performed. Alternatively, when method 2 is used, it is not guaranteed that a transmission resource is always selected to be in a DRX active time of an Rx terminal, so that there may be a case where sidelink data transmitted by a Tx terminal is transmitted in a DRX inactive time of the Rx terminal. However, even if the area corresponding to 1302 in FIG. 13 is small, a candidate resource may also be selected in an area of reference numeral 1301, so that there may be no problem in securing a sufficient quantity of candidate resources included in the set of candidate resources.

When aforementioned method 2 is used, in order to compensate for shortcomings of method 2, an initial transmission resource may be randomly selected only from candidate resources included in the DRX active time from among the candidate resources included in the reported set of candidate resources, and a retransmission resource may be randomly selected from all candidates included in the reported set of candidate resources. This is due to initial transmission being more important than retransmission. When method 2 is used, reference is made to the third embodiment for a detailed method of selecting a set of candidate resources in consideration of DRX.

In addition, retransmission methods in a sidelink may be divided into a HARQ feedback-based retransmission method and a blind retransmission method. The HARQ feedback-based retransmission method is a method in which retransmission is performed when HARQ feedback is performed and NACK is received after initial transmission, and retransmission is not performed otherwise. This method may be possible when a PSFCH resource is configured in a resource pool to support HARQ feedback, and a transmission terminal activates HARQ feedback via SCI during sidelink transmission. However, if no PSFCH resource is configured in a resource pool, or HARQ feedback is not activated, the terminal is unable to receive HARQ feedback, so that, in this case, the terminal may perform blind retransmission. Blind retransmission is a method in which, when a terminal selects a retransmission resource, repetitive transmission is necessarily performed in the selected resource. Therefore, in a case of performing blind retransmission, when a peer terminal transmits sidelink data to a terminal performing DRX, it is necessary to ensure that not only initial transmission but also retransmission are performed in a time period corresponding to a DRX active time of the Rx terminal. As a condition for using method 2, one or more of the following may be considered. The disclosure is not limited only to the following conditions.
* Condition 1: a case where a terminal performs HARQ feedback-based retransmission;
* Condition 2: a case of unicast or group cast transmission;
* Condition 3: a case of unicast transmission; and
* Condition 4: a case of performing partial sensing or random selection.

Condition 2 is due to HARQ feedback-based retransmission being supported only in unicast or groupcast transmission. Condition 3 is to further limit an environment to which method 2 is applied. Condition 4 may be considered when SL DRX is applied only to partial sensing or random selection, rather than full sensing.

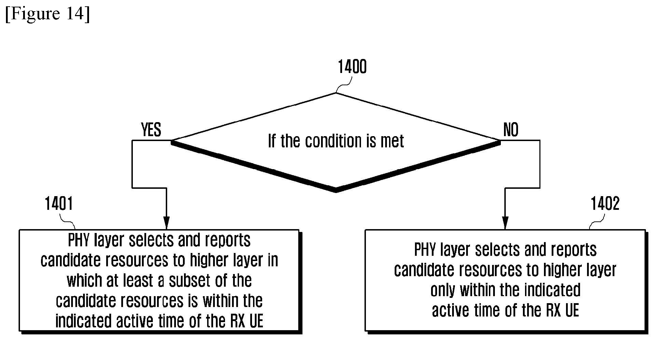

FIG. 14 is a diagram illustrating that method 2 is applied base on the above conditions, according to an embodiment.

Referring to FIG. 14, if at least one of the conditions presented above is satisfied at 1400, a terminal moves to 1401 to apply method 2. Alternatively, if at least one of the conditions is not satisfied at 1400, the terminal moves to 1402 to apply method 1. Here, it may be interpreted that, in method 1 at 1402, a subset in 1401 becomes a whole set. In other words, method 2 may include method 1. In method 2, there may occur a case in which some resources included in a set may not be included in a time period corresponding to a DRX active time of SL DRX of an Rx terminal, and there may occur a case in which all resources are included in the time period corresponding to the DRX active time of SL DRX of the Rx terminal. Therefore, it may be interpreted that method 1 corresponds to one case of method 2.

A third embodiment proposes a detailed method of selecting a set of candidate resources in consideration of DRX when method 1 or method 2 of the second embodiment is used.

According to the existing mode 2 resource selection method, the terminal determines a set (S_{A}) of candidate resources via a Mode2 procedure in a physical layer and reports the same to a higher layer of the terminal, and the higher layer of the terminal randomly selects a resource from the resource candidates included in the S_{A}. In this case, not only an initial transmission resource but also a retransmission resource may be selected. If an initial transmission resource and a retransmission resource are selected, a resource positioned earlier in time from among randomly selected resources may be the initial transmission resource and a resource positioned later in time may be the retransmission resource. When the terminal determines a set (S_{A}) of candidate resources via a Mode2 procedure in a physical layer, the candidate resources may be determined in all candidates (Mₜₒₜₐₗ) within the resource selection window as shown in FIG. 7. Selecting S_{A} in Mₜₒₜₐₗ is based on a sensing result. In addition, according to the Mode2 procedure, resource candidates corresponding to S_{A} ≥ X·Mₜₒₜₐₗ need to be selected. Here, X is a factor for determination of the number of candidate resources to be included in S_{A}, and X may be selected from values corresponding to {0.2, 0.35, 0.5} and may be (pre-)configured in a resource pool based on priority. X is provided from the higher layer of the terminal to the physical layer, and the Mode2 procedure is thus performed in the physical layer. If resources corresponding to a selection result of S_{A} < X·Mₜₒₜₐₗ are selected via sensing, S_{A} ≥ X·Mₜₒₜₐₗ may be guaranteed by lowering a reference signal received power (RSRP) threshold. This is because, as described above, only when a sufficient quantity of candidate resources included in S_{A} is guaranteed, a probability of collision with a resource selected by another terminal can be reduced when the set of candidate resources is reported to a higher layer of the terminal and random selection is thus performed.

If DRX is not considered, all slots within the resource selection window [n+T₁, n+T₂] illustrated in FIG. 7 may be candidate resources included in Mₜₒₜₐₗ in full sensing, only Y slots within the resource selection window [n+T₁, n+T₂] may be candidate resources included in Mₜₒₜₐₗ when periodic resource reservation is performed in partial sensing, and only Y' slots within the resource selection window [n+T₁, n+T₂] may be candidate resources included in Mₜₒₜₐₗ when aperiodic resource reservation is performed in partial sensing.

If DRX is considered and method 1 is used, all resources included in S_{A} need to be included in a time period corresponding to the DRX active time of the Rx terminal, so that, unlike conventional cases, only slots included in the time period corresponding to the DRX active time within the resource selection window [n+T₁, n+T₂] illustrated in FIG. 7 may be candidate resources included in Mₜₒₜₐₗ in full sensing, only Y slots included in the DRX active time within the resource selection window [n+T₁, n+T₂] may be candidate resources included in Mₜₒₜₐₗ when periodic resource reservation is performed in partial sensing, and only Y' slots included in the DRX active time within the resource selection window [n+T₁, n+T₂] may be candidate resources included in Mₜₒₜₐₗ when aperiodic resource reservation is performed in partial sensing. Then, resource candidates corresponding to S_{A} ≥ X·Mₜₒₜₐₗ may be selected via the Mode2 procedure.

Alternatively, if DRX is considered and method 2 is used, only some resources included in S_{A} may be included in the time period corresponding to the DRX active time of the Rx terminal, and some of the other resources included in the set may not be included in the time period corresponding to the DRX active time of the Rx terminal. When method 2 is used, if resource candidates corresponding to S_{A} ≥ X·Mₜₒₜₐₗ are selected via the existing Mode2 procedure of the conventional method, it may be difficult to secure a certain amount or more of resources included in the time period corresponding to the DRX active time of the Rx terminal from among the resources included in S_{A}. This is because the time period corresponding to 1302 may not be sufficiently secured when referring to FIG. 13, and many resource candidates may be excluded from the time period corresponding to 1302 during S_{A} selection through sensing. Therefore, it is necessary to define the Mode2 procedure to prevent such a problem from occurring. In other words, if method 2 is used, when the Mode2 procedure is performed, it is necessary to ensure that a certain amount or more of the resources included in the time period corresponding to the DRX active time of the Rx terminal is secured from among the resources included in S_{A}. To this end, the following alternatives may be used. The disclosure is not limited only to the following alternatives.
* Alternative 1: When a peer terminal (Tx terminal) transmits sidelink data to a terminal performing DRX (Rx terminal), the peer terminal (Tx terminal) separates S_{A} into two subsets and performs a Mode2 procedure. In this case, a first subset is selected based on a time domain corresponding to a DRX active time of the Rx terminal within a resource selection window, and a second subset is selected based on a time domain corresponding to a DRX inactive time of the Rx terminal within the resource selection window.
* Alternative 2: When a peer terminal (Tx terminal) transmits sidelink data to a terminal performing DRX (Rx terminal), the peer terminal (Tx terminal) may first select a candidate resource included in S_{A} in a time domain corresponding to a DRX active time of the Rx terminal within a resource selection window, and may perform a Mode2 procedure in a corresponding area, and only if S_{A} ≥ X·Mₜₒₜₐₗ cannot be satisfied, the peer terminal may additionally select a candidate resource included in S_{A} in a time domain corresponding to a DRX inactive time of the Rx terminal within the resource selection window, so as to satisfy S_{A} ≥ X·Mₜₒₜₐₗ.

More specifically, in a case of alternative 1, the following two detailed operations may be considered.
* Alternative 1-1: All candidates (Mₜₒₜₐₗ) within the resource selection window may be determined by being divided into candidate Mₜₒₜₐₗ(1) in the time domain corresponding to the DRX active time of the Rx terminal and candidate Mₜₒₜₐₗ(2) in the time domain corresponding to the DRX inactive time of the Rx terminal. In this case, Mₜₒₜₐₗ=Mₜₒₜₐₗ(1)+Mₜₒₜₐₗ(2) is satisfied. In a physical layer, the terminal may select a resource candidate corresponding to S_{A}(1) ≥ X·Mₜₒₜₐₗ(1) and a resource candidate corresponding to S_{A}(2) ≥ X·Mₜₒₜₐₗ(2) via two Mode2 procedures. As described above, X is a factor for determination of the number of candidate resources to be included in S_{A}, and is a parameter provided from a higher layer of the terminal. Therefore, S_{A}(1) may be interpreted as a resource candidate selected in the time domain corresponding to the DRX active time, and S_{A}(2) may be interpreted as a resource candidate selected in the time domain corresponding to the DRX inactive time. Then, the terminal may report S_{A}=S_{A}(1)+S_{A}(2) to the higher layer of the terminal. The higher layer of the terminal may randomly select a resource from the candidate resources belonging to the S_{A}.
* Alternative 1-2: When all candidates (Mₜₒₜₐₗ) within the resource selection window are determined, the terminal may select, in a physical layer, a resource candidate corresponding to S_{A}(1) ≥ X·Y·Mₜₒₜₐₗ and a resource candidate corresponding to S_{A}(2) ≥ X·(1-Y)·Mₜₒₜₐₗ via two Mode2 procedures. As described above, X is a factor for determination of the number of candidate resources to be included in S_{A}, and is a parameter provided from a higher layer of the terminal. In addition, Y is a factor for determination of how many candidate resources included in the DRX active time is to be included in S_{A}, and a value of Y is not limited to a specific value in the disclosure. The value of Y may be selected from values between 0 and 1. The value of Y may be a value determined by terminal implementation, may be a value (pre-)configured in a resource pool, may be a value (pre-)configured independently, or may be a value configured via PC5-RRC. The values of X and Y may be received from the higher layer of the terminal, and as described above, in the physical layer, the terminal may perform the Mode2 procedure so as to report S_{A}=S_{A}(1)+S_{A}(2) to the higher layer of the terminal. The higher layer of the terminal may randomly select a resource from the candidate resources belonging to the S_{A}.

Unlike alternative 1, for alternative 2, corresponding terminal operations will be described in detail below. When all candidates (Mₜₒₜₐₗ) within the resource selection window are determined, the terminal, in a physical layer, first selects a candidate resource included in S_{A} in the time domain corresponding to the DRX active time of the Rx terminal within the resource selection window. However, there may be a case in which, the Mode2 procedure is performed when the time domain corresponding to 1302 in FIG. 13 is not sufficiently secured, so that S_{A} ≥ X·Mₜₒₜₐₗ cannot be satisfied. As described above, if resources corresponding to a selection result of S_{A} < X·Mₜₒₜₐₗ are selected via sensing, the terminal may lower an RSRP threshold so that resource candidates corresponding to S_{A} ≥ X·Mₜₒₜₐₗ are guaranteed. However, it is noted that, if there are few candidate resources belonging to the area 1302, there may be a case where S_{A} ≥ X·Mₜₒₜₐₗ cannot be satisfied no matter how low the RSRP threshold is. Therefore, alternative 2 is a method of additionally selecting, only for this case, a candidate resource included in S_{A} in the time domain corresponding to the DRX inactive time of the Rx terminal within the resource selection window so as to satisfy S_{A} ≥ X·Mₜₒₜₐₗ.

A fourth embodiment proposes detailed operations for a case where sensing in an inactive time and sensing an active time of sidelink DRX of the terminal performing sidelink DRX are not the same, as illustrated in 1203 of FIG. 12. This is due to DRX being an operation to reduce power consumption of the terminal.

Sensing operations performed by general terminals have been described with reference to FIG. 7 (full sensing), FIG. 8 (partial sensing for periodic transmission), and FIG. 9 (partial sensing for aperiodic transmission). If the terminal performs sidelink DRX, and in a period operating as a DRX inactive time (in other words, in the time period, the terminal may not perform decoding of control information and data information), the following sensing operations may be considered.
* Full sensing is not performed (partial sensing is performed).
* The value of k described with reference to FIG. 8 and FIG. 9 is always assumed to be 1. Even if (pre-)configured as K=2, sensing is performed only in a slot corresponding to k=1.
* CPS is not performed (only periodic-based partial sensing (PBPS) is performed).

As described with reference to FIG. 10, a fifth embodiment proposes terminal operations of performing Mode 2 via inter-UE coordination in a sidelink. In existing Mode2, a transmission terminal that is to transmit sidelink data performs resource allocation for sidelink data transmission, via direct sensing and resource selection operations. However, in an advanced Mode 2 scheme, a terminal other than a transmission terminal may provide resource allocation-related information to the transmission terminal. Here, providing resource allocation-related information to a transmission terminal by a terminal other than the transmission terminal may be referred to as inter-UE coordination. In this case, the transmission terminal may perform mode 2 resource selection using both sensing and resource selection operations of the transmission terminal and inter-UE coordination information provided by another terminal, and it may be noted that mode 2 resource selection may be performed using only inter-UE coordination information provided by another terminal. The embodiment proposes a method and a terminal operation for indicating corresponding information when UE-A provides UE-B with set information of time-frequency resource allocation that is suitable (preferred) or unsuitable (non-preferred) for transmission according to inter-UE coordination 1 described in FIG. 10. Herein, inter-UE coordination information may be referred to as RSAI.

First, the following two transmission methods may be considered when UE-A provides UE-B with set information of time-frequency resource allocation that is suitable (preferred) or unsuitable (non-preferred) for transmission according to inter-UE coordination 1.
* Transmission method 1: When UE-B requests inter-UE coordination from UE-A, UE-A provides inter-UE coordination information to UE-B; and
* Transmission method 2: If a certain specific condition is satisfied, UE-A provides inter-UE cooperation information to UE-B.

For transmission method 2, the specific condition may be a periodically configured time. Then, UE-A may provide inter-UE cooperation information to UE-B at a configured time point. However, the specific condition is not limited thereto in the disclosure. In addition, it is noted that, in a sidelink, both transmission method 1 and transmission method 2 may be considered, or only one method may be considered.

The embodiment is mainly provided according to transmission method 1. In transmission method 1, the following methods may be considered as a method for UE-B to request inter-UE coordination from UE-A. The disclosure is not limited only to only the following methods.
* Transmission method 1-1-1: Request inter-UE coordination via MAC CE;
* Transmission method 1-1-2: Request inter-UE coordination via 2^{nd} SCI; and
* Transmission method 1-1-3: Request inter-UE coordination via a PSFCH.

If 2^{nd} SCI is used in the above method, the method may be performed via a 2^{nd} SCI format newly defined in a sidelink. The corresponding 2^{nd} SCI format is referred to as 2^{nd} SCI format X. 2^{nd} SCI format X may include information included in Table 1 as well as an RSAI request which is information for requesting inter-UE coordination. That is, for inter-UE coordination, UE-B may also provide information provided in Table 1 to UE-A when inter-UE coordination is requested via 2^{nd} SCI format X.

**[Table 1]**

| |
|---|
| • RSAI request:1bit |
| o This field is used for explicit RSAI request. |
| • Priority: 3bits |
| o This field is used for indicating the priority of RSAI request. |
| • RSAI configuration: 1bit |
| o This field is used for UE-B to indicate whether UE-B's requested RSAI is for preferred or non-preferred resources in Scheme 1. |
| • RSAI latency bound: 10bits |
| ∘ This field is used for indicating UE-B's remaining PDB. |
| • Resource size $\left({L}_{subCH}\right) \left⌈{log}_{2}\left({N}_{subChannel}^{SL}\right)\right⌉$ bits |
| o This field is used for indicating UE-B's subchannel size in a slot used for the PSSCH transmission. |
| • Zone ID and Communication range requirement:(12 bits + 4bits) |
| ∘ This field is used for calculating distance and checking validity of RSAI feedback and RSAI usage. |
| • Source ID and Destination ID (8bits + 16bits) |
| o This field is used for distinguishing source and destination UE(s). |

In addition, as a combination of the above methods, a method of requesting inter-UE coordination from UE-A by UE-B may be considered. For example, referring to Table 1, since an RSAI request which is information for requesting inter-UE coordination may be indicated by 1-bit information, this may be indicated via a PSFCH according to transmission method 1-1-3. Alternatively, other information shown in Table 1 is difficult to transmit through a PSFCH, so that a method of transmitting the information via 2^{nd} SCI according to transmission method 1-1-2 may be considered.

In transmission method 1, the following two methods may be considered as a method of providing UE-B with inter-UE coordination information by UE-A. The disclosure is not limited only to only the following methods.
* Transmission method 1-2-1: Inter-UE coordination is signaled via MAC CE; and
* Transmission method 1-2-2: When the amount of inter-UE coordination information. is equal to or more than a specific threshold, the inter-UE coordination information is signaled via MAC CE, and otherwise, inter-UE coordination information is signaled via 2^{nd} SCI.

If 2^{nd} SCI is used in the above method, the method may be performed via a 2^{nd} SCI format newly defined in a sidelink. This format may be determined to be the same 2^{nd} SCI format X as the 2^{nd} SCI format described in transmission method 1-1-2, or may be defined to be a new 2^{nd} SCI format different from the 2^{nd} SCI format X. If the format is determined to be the same 2^{nd} SCI format X as the 2^{nd} SCI format described in transmission method 1-1-2, the method may be a method in consideration of a restricted type of 2^{nd} SCI format. Specifically, since the bit indicating a 2^{nd} SCI format type by using the current 1^{st} SCI is 2 bits, when the corresponding method is used, there is a space for another 2^{nd} SCI format for a later time. Specifically, if the 2^{nd} SCI format in transmission method 1-2-2 is determined to be the same 2^{nd} SCI format X as the 2^{nd} SCI format in transmission method 1-1-2, 2^{nd} SCI format X is determined to have a fixed payload size, and information to be used may be different depending on whether the 2^{nd} SCI format is used in transmission method 1-1-2 or used in transmission method 1-2-2. First, the 2^{nd} SCI format for signaling inter-UE coordination information according to transmission method 1-2-2 may include the following bit fields in addition to the bit fields presented in Table 1.

**[Table 2]**

| |
|---|
| • Identifier for SCI Format: 1bit |
| ∘ This field is used to distinguish transmission method 1-1-2 and transmission method 1-2-2. |
| • RSAI feedback: X bits |
| o This field is used for indicating RSAI. |

In Table 2, Identifier for SCI Format may be a field for distinguishing whether corresponding information in one band is information for requesting inter-UE coordination according to transmission method 1-1-2 or information for providing inter-UE coordination information according to transmission method 1-2-2. In Table 2, RSAI feedback is a field corresponding to inter-UE coordination information. The amount of corresponding information is not limited to a specific value.

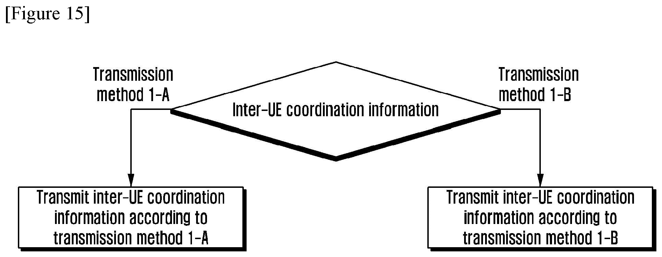

According to transmission methods 1-1-1, 1-1-2, and 1-1-3 and transmission methods 1-2-1 and 1-2-2 described above, a sidelink terminal may indicate corresponding information in different ways when requesting inter-UE coordination information and when providing inter-UE coordination information. As an example, when transmission method 1 is used in the sidelink transmission method, if transmission method 1-1-2 and transmission method 1-2-1 are considered, the terminal may indicate corresponding information by using different methods depending on inter-UE coordination information, as shown in FIG. 15. For corresponding transmission methods, reference is made to the above description.

As described with reference to FIG. 10, a sixth embodiment proposes terminal operations of performing Mode 2 via inter-UE coordination in a sidelink. In FIG. 10, according to inter-UE coordination method 1, UE-A may provide UE-B with set information of time-frequency resource allocation that is suitable (preferred) or unsuitable (non-preferred) for transmission. In addition, as described in the fifth embodiment, the following transmission method 1 may be considered.

* Transmission method 1: When UE-B requests inter-UE coordination from UE-A, UE-A provides inter-UE coordination information to UE-B.

The embodiment proposes a condition for requesting inter-UE cooperation information from UE-B by UE-A in transmission method 1. Specifically, options shown in Table 3 may be considered.

**[Table 3]**

| |
|---|
| • Option 1: When UE-B expects to trigger resource (re)selection for PSCCH/PSSCH transmission to UE-A. |
| • Option 2: Priority value of UE-B's transmission is smaller than a threshold. |
| • Option 3: UE-B's sensing results is not available. |
| • Option 4: UE-B has a TB to be transmitted other than the explicit request. |
| • Option 5: There is no available inter-UE coordination information at UE-B side for a certain duration of time. |
| • Option 6: The size of S_A obtained after Step 7) of Rel-16 TS 38.214 Section 8.1.4 is larger than a threshold. |
| • Option 7: Remaining PDB of UE-B's transmission is larger than a threshold |
| • Option 8: UE-B has data/TB for transmission that can be multiplexed with request to UE-A |
| • Option 9: It is up to UE-B's implementation. |

The disclosure is not limited to the options presented above. Specifically, if one of the options other than option 9 is a necessary and sufficient condition for UE-A to request inter-UE cooperation information from UE-B, the condition for requesting inter-UE coordination may be very restrictive. Accordingly, the condition for UE-A to request inter-UE cooperation information from UE-B may be determined by a combination of the presented options. For example, option 1 may be a necessary condition for UE-A to request inter-UE cooperation information from UE-B. In addition, other options may be determined by terminal implementation.

A seventh embodiment proposes a detailed method of selecting a set of candidate resources in consideration of DRX when method 1 or method 2 of the second embodiment is used. In addition, the seventh embodiment proposes a method of using the methods proposed in the third embodiment, and an additional method of selecting a set of candidate resources in consideration of DRX.

First, method 1 or method 2 in the second embodiment is as follows. The disclosure is not limited only to the following methods.
* Method 1: When a terminal selects a set of candidate resources via a mode 2 operation and reports the same to a higher layer of the terminal, all resources included in the set need to be resources included in a time period corresponding to a DRX active time of an Rx terminal.
* Method 2: When a terminal selects a set of candidate resources via a mode 2 operation and reports the same to a higher layer of the terminal, some of resources included in the set may be included in a time period corresponding to a DRX active time of an Rx terminal, and some of the other resources included in the set may not be included in the time period corresponding to the DRX active time of the Rx terminal.

There is a method in which, during sidelink mode 2 transmission, the Tx terminal selects transmission resources for periodic transmission, and indicates a non-zero reservation interval (or periodicity) *P_{rsvp_TX}* via SCI (1^{st} SCI) so as to periodically reserve transmission resources. Specifically, *P*_{*rsvp*_*TX*} may have various values, such as 0, 1:99, 100, 200, 300, 400, 500, 600, 700, 800, 900, and 1000. Alternatively, there is a method in which the Tx terminal selects transmission resources for aperiodic transmission, and performs aperiodic transmission by indicating *P_{rsvp_TX}* with 0 via SCI (1^{st} SCI).

DRX in a sidelink may be operated by configuration of DRX-related parameters as presented in FIG. 11, in consideration of periodic transmission of the Tx terminal. Therefore, when the Tx terminal selects transmission resources for periodic transmission and performs (*P_{rsvp_TX}*≠O) periodic transmission, a method, in which the Rx terminal regards, as a DRX active time, slots periodically reserved as transmission resources by the Tx terminal via SCI (1^{st} SCI), may be considered. According to the methods, even if a candidate resource selected from the set of candidate resources reported to a higher layer of the terminal through sensing in a physical layer is included in a time period corresponding to the DRX inactive time, if the corresponding resource is selected and transmitted, since periodically reserved resources are regarded as a DRX active time by the Rx terminal, there is no problem in receiving, by the Rx terminal, data transmitted by the Tx terminal, so that method 1 or method 2 of the second embodiment may not be necessary. However, if the Tx terminal still performs (*P_{rsvp_TX}*=O) aperiodic transmission, method 1 or method 2 of the presented second embodiment needs to be considered.

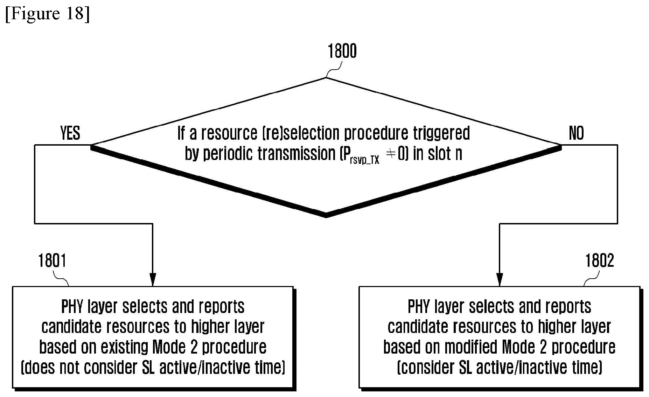

FIG. 18 is a diagram illustrating a terminal operation according to whether a Tx terminal performs periodic transmission, according to an embodiment.

FIG. 18 may be applied for a case in which, when a Tx terminal selects transmission resources for periodic transmission and performs (*P_{rsvp_TX}*=O) periodic transmission, slots periodically reserved as transmission resources by the Tx terminal via SCI (1^{st} SCI) are regarded as a DRX active time by an Rx terminal.

Referring to FIG. 18, at 1800, if a Tx terminal selects transmission resources for periodic transmission and performs (*P_{rsvp_TX}*=O) periodic transmission, the terminal may move to 1801 and report selected candidate resources to a higher level of the terminal by using an existing Mode2 method. The existing Mode2 method may be a method of selecting a candidate resource regardless of a sidelink downlink configuration. According to this method, the terminal may not adjust a candidate resource to be included in a DRX active time during selection of the candidate resource. In contrast, if the condition at 1800 is not satisfied, in other words, if the Tx terminal performs (*P_{rsvp_TX}*=O) aperiodic transmission, the terminal may move to 1802 and report selected candidate resources to a higher level of the terminal by using a modified Mode2 method. In the modified Mode2 method, unlike the existing Mode2 method, candidate resources are selected in consideration of a sidelink DRX configuration. For example, method 1 or method 2 of the second embodiment may be applied.

The following embodiment proposes a more specific terminal operation corresponding to operation 1802 in FIG. 18. However, the disclosure is not limited to the following alternatives. In addition, a combination of the following alternatives may also be used. Further, among the following alternatives, a terminal operation to be used may be (pre-)configured.

A first alternative is a method of, before selecting a candidate resource by using a sensing result, restricting at least N candidate resources (N slots) among resource selection candidate resources within a resource selection window [n+T₁, n+T₂] to be in a DRX active time. For details on the resource selection window, reference is made to FIG. 7 to FIG. 9. Specifically, in full sensing, as shown in FIG. 7, at least N candidate resources (N slots) among Mₜₒₜₐₗ (a total number of candidate resources before selecting candidate resources by using a sensing result) candidate resources within the resource selection window [n+T₁, n+T₂] may be restricted to be in a DRX active time. As illustrated in FIG. 8, when periodic resource reservation is performed (*P_{rsvp_TX}≠*O) in partial sensing, N candidate resources (N slots) among Y slots within the resource selection window [n+T₁, n+T₂] may be restricted to be in a DRX active time. As illustrated in FIG. 9, when aperiodic resource reservation is performed (*P_{rsvp_TX}≠*O) in partial sensing, N candidate resources (N slots) among Y' slots within the resource selection window [n+T₁, n+T₂] may be restricted to be in a DRX active time. It is noted that Y or Y' may be Mₜₒₜₐₗ (a total number of candidate resources before selecting candidate resources by using a sensing result) in partial sensing. In the above alternative, a value of N may be (pre-)configured, and a range of values that may be configured as the value of N in the disclosure is not limited to a specific value. In addition, N candidate resources may be restricted to resources located earlier in time. In addition, N candidate resources may be Mₜₒₜₐₗ in full sensing, or N=Y or N=Y' in partial sensing.

A second alternative is a method of, in a physical layer, when determining a set (S_{A}) of candidate resources by using a sensing result and reporting the same to a higher layer of the terminal, restricting at least K candidate resources (K slots) among the candidate resources included in S_{A} to be in a DRX active time. Here, all candidate resources of S_{A} may be in the DRX active time. Specifically, candidate resources corresponding to X·Nₜₒₜₐₗ may be selected. Here, Nₜₒₜₐₗ represents the number of all candidate resources corresponding to the DRX active time from among the candidate resources included in S_{A}. X is a factor indicating the number of candidate resources to be selected from Nₜₒₜₐₗ, and is a parameter provided from a higher layer of the terminal. For example, X may be selected from values corresponding to {0.2, 0.35, 0.5} and may be (pre-)configured in a resource pool, based on priority. If, as a result of sensing, a smaller number of resources than X·Nₜₒₜₐₗ are selected, an RSRP threshold may be lowered so that X·Nₜₒₜₐₗ is selected. This is because, only when a sufficient quantity of candidate resources is guaranteed, a probability of collision with a resource selected by another terminal can be reduced when the set of candidate resources is reported to a higher layer of the terminal and random selection is thus performed. In the second alternative, selecting and reporting resource candidates corresponding to X·Nₜₒₜₐₗ may be interpreted as operations separate from determining S_{A} via the existing Mode 2 procedure and reporting the same to a higher layer of the terminal.

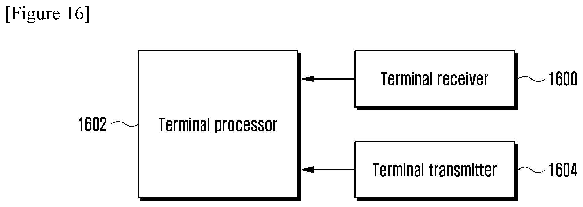

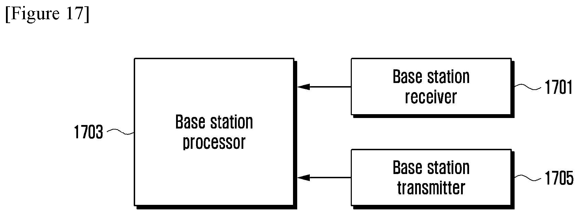

In order to perform the aforementioned embodiments of the disclosure, transmitters, receivers, and processors of a terminal and a base station are illustrated in FIG. 16 and FIG. 17, respectively. In the above embodiments, a method for a terminal to perform multi-antenna transmission and reception in a sidelink is shown, and in order to perform the method, each of receivers, processors, and transmitters of a base station and a terminal needs to operate according to the embodiments.

Specifically, FIG. 16 is a block diagram illustrating an internal structure of a terminal according to an embodiment of the disclosure. As illustrated in FIG. 16, the terminal of the disclosure may include a terminal receiver 1600, a terminal transmitter 1604, and a terminal processor 1602. The terminal receiver 1600 and the terminal transmitter 1604 may collectively be referred to as a transceiver. The transceiver may transmit a signal to or receive a signal from a base station. The signal may include control information and data. To this end, the transceiver may include an RF transmitter configured to perform up-conversion and amplification of a frequency of a transmitted signal, an RF receiver configured to perform low-noise amplification of a received signal and down-conversion of a frequency, and the like. In addition, the transceiver may receive a signal via a radio channel and output the signal to the terminal processor 1602, and may transmit, via a radio channel, a signal output from the terminal processor 1602. The terminal processor 1602 may control a series of procedures so that the terminal may operate according to the aforementioned embodiments.

FIG. 17 is a block diagram illustrating an internal structure of a base station according to an embodiment. As illustrated in FIG. 17, a base station of the disclosure may include a base station receiver 1701, a base station transmitter 1705, and a base station processor 1703. The base station receiver 1701 and the base station transmitter 1705 may collectively be referred to as a transceiver. The transceiver may transmit a signal to or receive a signal from a terminal. The signal may include control information and data. To this end, the transceiver may include an RF transmitter configured to perform up-conversion and amplification of a frequency of a transmitted signal, an RF receiver configured to perform low-noise amplification of a received signal and down-conversion of a frequency, and the like. In addition, the transceiver may receive a signal via a radio channel and output the signal to the base station processor 1703, and may transmit, via a radio channel, a signal output from the terminal processor 1703. The base station processor 1703 may control a series of procedures so that the base station may operate according to the aforementioned embodiment of the disclosure.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Further, the above respective embodiments may be employed in combination, as necessary. For example, all the embodiments of the disclosure may be partially combined with each other to operate a base station and a terminal.

While the disclosure has been described with reference to various embodiments, various changes may be made without departing from the spirit and the scope of the disclosure, which is defined, not by the detailed description and embodiments, but by the appended claims and their equivalents.

Some examples are provided in the following clauses:
1. A method performed by a first user equipment (UE) in a communication system, the method comprising:
   transmitting, to a second UE, first sidelink control information (SCI) requesting inter-UE coordination information; and
   receiving, from the second UE, second SCI providing the inter-UE coordination information,
   wherein the first SCI comprises a field indicating that the first SCI is used to request the inter-UE coordination information.
2. The method of claim 1, wherein the first SCI and the second SCI correspond to a same SCI format, the SCI format being a 2nd-stage SCI format carried on a physical sidelink shared channel (PSSCH).
3. The method of claim 1, wherein the second SCI comprises the field indicating that the second SCI is used to provide the inter-UE coordination information.
4. The method of claim 1, wherein a bit size for the field is one bit.
5. A method performed by a second user equipment (UE) in a communication system, the method comprising:
   receiving, from a first UE, first sidelink control information (SCI) requesting inter-UE coordination information; and
   transmitting, to the first UE, second SCI providing the inter-UE coordination information,
   wherein the first SCI comprises a field indicating that the first SCI is used to request the inter-UE coordination information.
6. The method of claim 5, wherein the first SCI and the second SCI correspond to a same SCI format, the SCI format being a 2nd-stage SCI format carried on a physical sidelink shared channel (PSSCH).
7. The method of claim 5, wherein the second SCI comprises the field indicating that the second SCI is used to provide the inter-UE coordination information.
8. The method of claim 5, wherein a bit size for the field is one bit.
9. A first user equipment (UE) in a communication system, the first UE comprising:
   a transceiver; and
   a controller configured to:
      transmit, to a second UE, first sidelink control information (SCI) requesting inter-UE coordination information, and
      receive, from the second UE, second SCI providing the inter-UE coordination information,
      wherein the first SCI comprises a field indicating that the first SCI is used to request the inter-UE coordination information.
10. The first UE of claim 9, wherein the first SCI and the second SCI correspond to a same SCI format, the SCI format being a 2nd-stage SCI format carried on a physical sidelink shared channel (PSSCH).
11. The first UE of claim 9, wherein the second SCI comprises the field indicating that the second SCI is used to provide the inter-UE coordination information.
12. The first UE of claim 9, wherein a bit size for the field is one bit.
13. A second user equipment (UE) in a communication system, the second UE comprising:
   a transceiver; and
   a controller configured to:
      receive, from a first UE, first sidelink control information (SCI) requesting inter-UE coordination information, and
      transmit, to the first UE, second SCI providing the inter-UE coordination information,
      wherein the first SCI includes a field indicating that the first SCI is used to request the inter-UE coordination information.
14. The second UE of claim 13, wherein the first SCI and the second SCI correspond to a same SCI format, the SCI format being a 2nd-stage SCI format carried on a physical sidelink shared channel (PSSCH).
15. The second UE of claim 13, wherein:
   the second SCI comprises the field indicating that the second SCI is used to provide the inter-UE coordination information, and
   a bit size for the field is one bit.

## Claims

1. A method performed by a first user equipment, UE, (401, 501) in a communication system, the method comprising:
identifying a sidelink discontinuous reception, DRX, active time of a second UE (402, 502);
selecting a resource for sidelink data;
transmitting, to the second UE in the DRX active time of the second UE, the sidelink data on the selected resource,
wherein the resource is selected from a set of candidate resources, and the set of candidate resources includes at least one resource within the DRX active time of the second UE.

2. The method of Claim 1, further comprising:
identifying a first set of candidate resources; and
in case that a number of candidate resources within the DRX active time of the second UE in the first set of candidate resources satisfies predetermined condition, identifying a second set of candidate resources by adding at least one candidate resource in the first set of candidate resources;
wherein the set of candidate resources corresponds to the second set of candidate resources, and
wherein the at least one candidate resource added in the first set of candidate resources is based on a sidelink, SL, DRX configuration of the second UE.

3. The method of Claim 1, wherein, in case that the first UE performs a periodic transmission of the sidelink data, the DRX active time of the second UE includes one or more slots associated with the periodic transmission of the sidelink data.

4. A method performed by a second user equipment, UE, (402, 502) in a communication system, the method comprising:
identifying a sidelink discontinuous reception, DRX, active time of the second UE (402, 502);
receiving, from a first UE (401, 501) in the DRX active time of the second UE, sidelink data on a selected resource,
wherein the resource is selected from a set of candidate resources, and the set of candidates resoruces includes at least one resource within the DRX active time of the second UE.

5. The method of Claim 4, wherein:
the set of candidate resources corresponds to a second set of candidate resources,
the second set of candidate resources is identified by adding at least one candidate resource in a first set of candidate resources, in case that a number of candidate resources within the DRX active time of the second UE in the first set of candidate resources satisfies predetermined condition, and
the at least one candidate resource added in the first set of candidate resources is based on an SL DRX configuration of the second UE.

6. The method of Claim 4, wherein, in case that the first UE performs a periodic transmission of the sidelink data, the DRX active time of the second UE includes one or more slots associated with the periodic transmission of the sidelink data.

7. A first user equipment, UE, (401, 501) in a communication system, the first UE comprising:
a transceiver; and
at least one processor configured to:
identify a sidelink discontinuous reception, DRX, active time of a second UE (402, 502);
select a resource for sidelink data;
transmit, to the second UE in the DRX active time of the second UE, the sidelink data on the selected resource,
wherein the resource is selected from a set of candidate resources, and the set of candidate resources includes at least one resource within the DRX active time of the second UE.

8. The first UE of Claim 7, wherein the at least one processor is further configured to:
identifying a first set of candidate resources; and
in case that a number of candidate resources within the DRX active time of the second UE in the first set of candidate resources satisfies predetermined condition, identifying a second set of candidate resources by adding at least one candidate resource in the first set of candidate resources;
wherein the set of candidate resources corresponds to the second set of candidate resources, and
wherein the at least one candidate resource added in the first set of candidate resources is based on a sidelink, SL, DRX configuration of the second UE.

9. The method of Claim 7, wherein, in case that the first UE performs a periodic transmission of the sidelink data, the DRX active time of the second UE includes one or more slots associated with the periodic transmission of the sidelink data.

10. A second user equipment, UE, (402, 502) in a communication system, the second UE comprising:
a transceiver; and
at least one processor configured to:
identify a sidelink discontinuous reception, DRX, active time of the second UE (402, 502); receive, from a first UE (401, 501) in the DRX active time of the second UE, sidelink data on a selected resource,
wherein the resource is selected from a set of candidate resources, and the set of candidates resoruces includes at least one resource within the DRX active time of the second UE.

11. The second UE of Claim 10, wherein:
the set of candidate resources corresponds to a second set of candidate resources,
the second set of candidate resources is identified by adding at least one candidate resource in a first set of candidate resources, in case that a number of candidate resources within the DRX active time of the second UE in the first set of candidate resources satisfies predetermined condition, and
the at least one candidate resource added in the first set of candidate resources is based on an SL DRX configuration of the second UE.

12. The second UE of Claim 10, wherein, in case that the first UE performs a periodic transmission of the sidelink data, the DRX active time of the second UE includes one or more slots associated with the periodic transmission of the sidelink data.
